# EUROPEAN PATENT APPLICATION

(11) **EP 4 020 996 A1**
(43) Date of publication of application: **29.06.2022**
(21) Application number: 21744327.4
(22) Date of filing: 22.01.2021
(51) Int. Cl.: H04N 21/2187, H04N 21/4788

(54) **INTERACTIVE DATA PLAYING METHOD AND ELECTRONIC DEVICE**

(30) Priority: 22.01.2020 CN 202010075693
(71) Applicant: Beijing Dajia Internet Information Technology Co., Ltd., Beijing 100085 (CN)
(72) Inventor: ZHANG, Yang, Beijing 100085 (CN); FAN, Wei, Beijing 100085 (CN)
(74) Representative: Yang, Shu
(86) International application number: PCT/CN2021/073404
(87) International publication number: WO 2021/148013

(57) **Abstract**

The present disclosure relates to an interactive data playing method and an electronic device, and belongs to the technical field of computers. The method comprises: a live streaming server releasing live streaming data sent by a terminal in a first live streaming room into a directed live streaming room; a terminal in the directed live streaming room playing the live streaming data in a directed live streaming interface and sending acquired first interactive data to the live streaming server; and the live streaming server receiving the first interactive data and sending same to the terminal in the first live streaming room. The terminal in the first live streaming room plays the live streaming data in a first live streaming interface, and plays the first interactive data in the first live streaming interface when acquiring the first interactive data.

## Description

### CROSS-REFERENCE TO RELATED APPLICATION

The present disclosure claims priority to the Chinese patent application No. 202010075693.6 filed on January 22, 2020, the entire content of which is incorporated herein by reference.

### TECHNICAL FIELD

The present disclosure relates to the field of computer technologies, and in particular relates to a method for displaying interaction data and an electronic device.

### BACKGROUND

With the continuous maturity of live-streaming technologies, more and more users choose to enrich their daily lives by performing or watching a live stream.

### SUMMARY

The present disclosure provides a method for displaying interaction data and an electronic device. The technical solutions of the present disclosure are described as below.

In a first aspect of embodiments of the present disclosure, a method for displaying interaction data is provided. The method includes:
displaying live-streaming data, sent by an anchor terminal in a first live-streaming room, in a first live-streaming interface corresponding to the first live-streaming room;
acquiring first interaction data posted by a terminal in a directed live-streaming room with regard to the live-streaming data, wherein the directed live-streaming room is configured to display the live-streaming data; and
displaying the first interaction data in the first live-streaming interface.

In some embodiments, the acquiring the first interaction data posted by the terminal in the directed live-streaming room with regard to the live-streaming data includes:
receiving the first interaction data sent from a live-streaming server, wherein the first interaction data is sent to the live-streaming server by the terminal.

In some embodiments, the method further includes:
sending the live-streaming data to a live-streaming server based on an anchor identifier of the first live-streaming room, wherein the live-streaming data is published into the first live-streaming room and the directed live-streaming room by the live-streaming server.

In some embodiments, the displaying the first interaction data in the first live-streaming interface includes at least one of:
adding a directing sign to the first interaction data, and displaying the first interaction data added with the directing sign in the first live-streaming interface;
displaying, in the first live-streaming interface, the first interaction data in a target displaying style; and
displaying the first interaction data and a directed-audience identifier in the first live-streaming interface, wherein the directed-audience identifier is a virtual audience identifier registered for the directed live-streaming room in the first live-streaming room.

In some embodiments, the method further includes:
acquiring second interaction data posted by a terminal in the first live-streaming room with regard to the live-streaming data; and
displaying the first interaction data in the first live-streaming interface includes:
displaying the first interaction data and the second interaction data in the first live-streaming interface.

In some embodiments, the displaying the first interaction data and the second interaction data in the first live-streaming interface includes at least one of:
displaying, in the first live-streaming interface, the first interaction data and the second interaction data in different displaying styles; and
displaying the first interaction data and the second interaction data in different displaying regions of the first live-streaming interface.

In a second aspect of the embodiments of the present disclosure, another method for displaying interaction data is provided. The method includes:
displaying live-streaming data, sent by an anchor terminal in a first live-streaming room, in a directed live-streaming interface corresponding to a directed live-streaming room;
acquiring first interaction data posted into the directed live-streaming interface; and
sending the first interaction data to a terminal in the first live-streaming room, wherein the first interaction data is displayed, by the terminal, in a first live-streaming interface corresponding to the first live-streaming room.

In some embodiments, the method further includes:
receiving the live-streaming data sent from a live-streaming server, wherein the live-streaming data is sent to the live-streaming server by the anchor terminal in the first live-streaming room.

In some embodiments, the sending the first interaction data to the terminal in the first live-streaming room includes:
acquiring a live-streaming schedule of the directed live-streaming room, wherein the live-streaming schedule includes a correspondence relationship between a live-streaming room identifier and a time period;
determining, according to a current time point and the live-streaming schedule, the live-streaming room identifier corresponding to the time period to which the current time point belongs, wherein the live-streaming room identifier is configured to indicate the first live-streaming room; and
sending an interaction message to the live-streaming server, wherein the interaction message includes the first interaction data and the live-streaming room identifier, and the first interaction data is sent, by the live-streaming server, to the terminal in the first live-streaming room.

In a third aspect of the embodiments of the present disclosure, yet another method for displaying interaction data is provided. The method includes:
publishing live-streaming data, sent by an anchor terminal in a first live-streaming room, into a directed live-streaming room;
receiving first interaction data posted by a terminal in the directed live-streaming room with regard to the live-streaming data; and
sending the first interaction data to a terminal in the first live-streaming room.

In some embodiments, the publishing the live-streaming data, sent by the anchor terminal in the first live-streaming room, into the directed live-streaming room includes:
acquiring an audience identifier set of the first live-streaming room, wherein the audience identifier set includes a directed-audience identifier registered for the directed live-streaming room; and
publishing the live-streaming data into the directed live-streaming room based on the directed-audience identifier.

In some embodiments, the receiving the first interaction data posted by the terminal in the directed live-streaming room with regard to the live-streaming data includes:
receiving, by a directing server, the first interaction data sent by a terminal in the directed live-streaming room, wherein the directing server corresponds to the directed live-streaming room; and
sending the first interaction data to a first server from the directing server, wherein the first server corresponds to the first live-streaming room;
and the sending the first interaction data to the terminal in the first live-streaming room includes:
sending, by the first server, the first interaction data to the terminal in the first live-streaming room.

In some embodiments, the receiving the first interaction data posted by the terminal in the directed live-streaming room with regard to the live-streaming data includes:
receiving, by a first server, the first interaction data sent by a terminal in the directed live-streaming room, wherein the first server corresponds to the first live-streaming room;
and the sending the first interaction data to the terminal in the first live-streaming room includes:
sending, by the first server, the first interaction data to the terminal in the first live-streaming room.

In some embodiments, the publishing the live-streaming data, sent by the anchor terminal in the first live-streaming room, into the directed live-streaming room includes:
acquiring an audience identifier set of the directed live-streaming room, wherein the audience identifier set includes at least one audience identifier; and
sending the live-streaming data to an audience terminal corresponding to the at least one audience identifier.

In some embodiments, the sending the first interaction data to the terminal in the first live-streaming room includes:
sending an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, the method further includes:
acquiring a live-streaming schedule of the directed live-streaming room, wherein the live-streaming schedule includes a correspondence relationship between a live-streaming room identifier and a time period;
determining, according to a current time point and the live-streaming schedule, the live-streaming room identifier corresponding to the time period to which the current time point belongs; and
registering the directed-audience identifier for the directed live-streaming room in the first live-streaming room indicated by the live-streaming room identifier.

In some embodiments, the method further includes:
de-registering the directed-audience identifier in the first live-streaming room in response to a change of the live-streaming identifier as determined; and
registering a directed-audience identifier for the directed live-streaming room in a second live-streaming room indicated by the live-streaming identifier as changed.

In a fourth aspect of the embodiments of the present disclosure, an apparatus for displaying interaction data is provided. The apparatus includes:
a live-streaming data displaying unit, configured to display live-streaming data, sent by an anchor terminal in a first live-streaming room, in a first live-streaming interface corresponding to the first live-streaming room;
a first interaction data acquiring unit, configured to acquire first interaction data posted by a terminal in a directed live-streaming room with regard to the live-streaming data, wherein the directed live-streaming room is configured to display the live-streaming data; and
an interaction data displaying unit, configured to display the first interaction data in the first live-streaming interface.

In some embodiments, the first interaction data acquiring unit includes:
a receiving sub-unit configured to receive the first interaction data sent from a live-streaming server, wherein the first interaction data is sent to the live-streaming server by the terminal.

In some embodiments, the apparatus further includes:
a live-streaming data sending unit, configured to send the live-streaming data to a live-streaming server based on an anchor identifier of the first live-streaming room, wherein the live-streaming data is published into the first live-streaming room and the directed live-streaming room by the live-streaming server.

In some embodiments, the interaction data displaying unit includes at least one of:
a first displaying sub-unit, configured to add a directing sign to the first interaction data, and display the first interaction data added with the directing sign in the first live-streaming interface;
a second displaying sub-unit, configured to display, in the first live-streaming interface, the first interaction data in a target displaying style; or
a third displaying sub-unit, configured to display the first interaction data and a directed-audience identifier in the first live-streaming interface, wherein the directed-audience identifier is a virtual audience identifier registered for the directed live-streaming room in the first live-streaming room.

In some embodiments, the apparatus further includes:
a second interaction data acquiring unit, configured to acquire second interaction data posted by a terminal in the first live-streaming room with regard to the live-streaming data; and
the interaction data displaying unit is further configured to display the first interaction data and the second interaction data in the first live-streaming interface.

In some embodiments, the interaction data displaying unit includes at least one of:
a fourth displaying sub-unit, configured to display, in the first live-streaming interface, the first interaction data and the second interaction data in different displaying styles; and
a fifth displaying sub-unit, configured to display the first interaction data and the second interaction data in different displaying regions of the first live-streaming interface.

In a fifth aspect of the embodiments of the present disclosure, another apparatus for displaying interaction data is provided. The apparatus includes:
a live-streaming data displaying unit, configured to display live-streaming data, sent by an anchor terminal in a first live-streaming room, in a directed live-streaming interface corresponding to a directed live-streaming room;
an interaction data acquiring unit, configured to acquire first interaction data posted into the directed live-streaming interface; and
an interaction data sending unit, configured to send the first interaction data to a terminal in the first live-streaming room, wherein the first interaction data is displayed, by the terminal, in a first live-streaming interface corresponding to the first live-streaming room.

In some embodiments, the apparatus further includes:
a live-streaming data receiving unit, configured to receive the live-streaming data sent from a live-streaming server, wherein the live-streaming data is sent to the live-streaming server by an anchor terminal in the first live-streaming room.

In some embodiments, the interaction data sending unit includes:
a live-streaming schedule acquiring sub-unit, configured to acquire a live-streaming schedule of the directed live-streaming room, wherein the live-streaming schedule includes a correspondence relationship between a live-streaming room identifier and a time period;
a live-streaming room identifier determining sub-unit, configured to determine, according to a current time point and the live-streaming schedule, the live-streaming room identifier corresponding to the time period to which the current time point belongs, wherein the live-streaming room identifier is configured to indicate the first live-streaming room; and
an interaction message sending sub-unit, configured to send an interaction message to the live-streaming server, wherein the interaction message includes the first interaction data and the live-streaming room identifier, and the first interaction data is sent, by the live-streaming server, to the terminal in the first live-streaming room.

In a sixth aspect of the embodiments of the present disclosure, yet another apparatus for displaying interaction data is provided. The apparatus includes:
a live-streaming data publishing unit, configured to publish live-streaming data, sent by an anchor terminal in a first live-streaming room, into a directed live-streaming room;
an interaction data receiving unit, configured to receive first interaction data posted by a terminal in the directed live-streaming room with regard to the live-streaming data; and
an interaction data sending unit, configured to send the first interaction data to a terminal in the first live-streaming room.

In some embodiments, the live-streaming data publishing unit includes:
a first identifier acquiring sub-unit, configured to acquire an audience identifier set of the first live-streaming room, wherein the audience identifier set includes a directed-audience identifier registered for the directed live-streaming room; and
a live-streaming data publishing sub-unit, configured to publish the live-streaming data into the directed live-streaming room based on the directed-audience identifier.

In some embodiments, the interaction data receiving unit includes:
a first receiving sub-unit, configured to receive, by a directing server, the first interaction data posted by a terminal in the directed live-streaming room, wherein the directing server corresponds to the directed live-streaming room;
a first sending sub-unit, configured to send the first interaction data to a first server by the directing server, wherein the first server corresponds to the first live-streaming room; and
the interaction data sending unit includes:
   a second sending sub-unit, configured to send, by the first server, the first interaction data to a terminal in the first live-streaming room.

In some embodiments, the interaction data receiving unit includes:
a second receiving sub-unit, configured to receive, by a first server, the first interaction data posted by a terminal in the directed live-streaming room, wherein the first server corresponds to the first live-streaming room; and
the interaction data sending unit includes:
   a second sending sub-unit, configured to send, by the first server, the first interaction data to a terminal in the first live-streaming room.

In some embodiments, the live-streaming data publishing unit includes:
a second identifier acquiring sub-unit, configured to acquire an audience identifier set of the directed live-streaming room, wherein the audience identifier set includes at least one audience identifier; and
a live-streaming data sending sub-unit, configured to send the live-streaming data to an audience terminal corresponding to the at least one audience identifier.

In some embodiments, the interaction data sending unit includes:
an interaction message sending sub-unit, configured to send an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, the apparatus further includes:
a live-streaming schedule acquiring unit, configured to acquire a live-streaming schedule of the directed live-streaming room, wherein the live-streaming schedule includes a correspondence relationship between a live-streaming room identifier and a time period;
a live-streaming room identifier determining unit, configured to determine, according to a current time point and the live-streaming schedule, the live-streaming room identifier corresponding to the time period to which the current time point belongs; and
an audience identifier registering unit, configured to register the directed-audience identifier for the directed live-streaming room in the first live-streaming room indicated by the live-streaming room identifier.

In some embodiments, the apparatus further includes:
an audience identifier de-registering unit, configured to de-register the directed-audience identifier in the first live-streaming room in response to a change of the live-streaming identifier as determined; and
the audience identifier registering unit, is further configured to register a directed-audience identifier for the directed live-streaming room in a second live-streaming room indicated by the live-streaming identifier as changed.

In a seventh aspect of the embodiments of the present disclosure, a terminal is provided. The terminal includes:
at least one processor; and
a volatile or nonvolatile memory configured to store at least one instruction executable by the at least one processor;
wherein the at least one processor, when executing the at least one instruction, is caused to perform the methods for displaying interaction data as described in the above aspects.

In an eighth aspect of the embodiments of the present disclosure, a server is provided. The server includes:
at least one processor; and
a volatile or nonvolatile memory configured to store at least one instruction executable by the at least one processor;
wherein the at least one processor, when executing the at least one instruction, is caused to perform the methods for displaying interaction data as described in the above aspects.

In a ninth aspect of the embodiments of the present disclosure, a non-transitory computer-readable storage medium storing at least one instruction therein is provided. The at least one instruction, when executed by a processor of a terminal, causes the terminal to perform the methods for displaying interaction data as defined in the above aspects.

The at least one instruction, when executed by a processor of a server, causes the server to perform the methods for displaying interaction data as defined in the above aspects.

In a tenth aspect of the embodiments of the present disclosure, a computer program product is provided. At least one instruction in the computer program product, when executed by a processor of a terminal, causes the terminal to perform the methods for displaying interaction data as defined in the above aspects.

The at least one instruction in the computer program product, when executed by a processor of a server, causes the server to perform the methods for displaying interaction data as defined in the above aspects.

It should be understood that the above general description and the following detailed description are merely exemplary and explanatory, and are not intended to limit the present disclosure.

### BRIEF DESCRIPTION OF THE DRAWINGS

The accompanying drawings herein, which are incorporated in and constitute part of the description, illustrate embodiments consistent with the present disclosure, and serve to explain the principles of the present disclosure together with the description.
FIG. 1 is a schematic diagram of an implementation environment according to some embodiments of the present disclosure;
FIG. 2 is a flowchart of a method for displaying interaction data according to some embodiments of the present disclosure;
FIG. 3 is a flowchart of another method for displaying interaction data according to some embodiments of the present disclosure;
FIG. 4 is a flowchart of yet another method for displaying interaction data according to some embodiments of the present disclosure;
FIG. 5 is a flowchart of still yet another method for displaying interaction data according to some embodiments of the present disclosure;
FIG. 6 is a schematic diagram of another implementation environment according to some embodiments of the present disclosure;
FIG. 7 is a schematic diagram of a live-streaming interface according to some embodiments of the present disclosure;
FIG. 8 is a block diagram of an apparatus for displaying interaction data according to some embodiments of the present disclosure;
FIG. 9 is a block diagram of another apparatus for displaying interaction data according to some embodiments of the present disclosure;
FIG. 10 is a block diagram of yet another apparatus for displaying interaction data according to some embodiments of the present disclosure;
FIG. 11 is a block diagram of still yet another apparatus for displaying interaction data according to some embodiments of the present disclosure;
FIG. 12 is a block diagram of still yet another apparatus for displaying interaction data according to some embodiments of the present disclosure;
FIG. 13 is a block diagram of still yet another apparatus for displaying interaction data according to some embodiments of the present disclosure;
FIG. 14 is a structural block diagram of a terminal according to some embodiments of the present disclosure; and
FIG. 15 is a structural block diagram of a live-streaming server according to some embodiments of the present disclosure.

### DETAILED DESCRIPTION

In the disclosure, the term of "at least one" refers to one, two or more, the term of "plurality" refers to two or more, and the term of "each" refers to each of the corresponding plurality. For example, a plurality of audience identifiers include three audience identifiers, each refers to each of the three audience identifiers, and at least one refers to one, two, or three of the three audience identifiers.

It should be noted that user data involved in the present disclosure (including but not limited to user device data, user personal data, etc.) is all data authorized by a user or fully authorized by all parties.

As the form of live-streaming is becoming more and more diversified, a directed live-streaming room is proposed at present, into which live-streaming data published by other live-streaming rooms can be displayed, and an audience terminal in the directed live-streaming room can watch the live-streaming data and interact with regard to the live-streaming data.

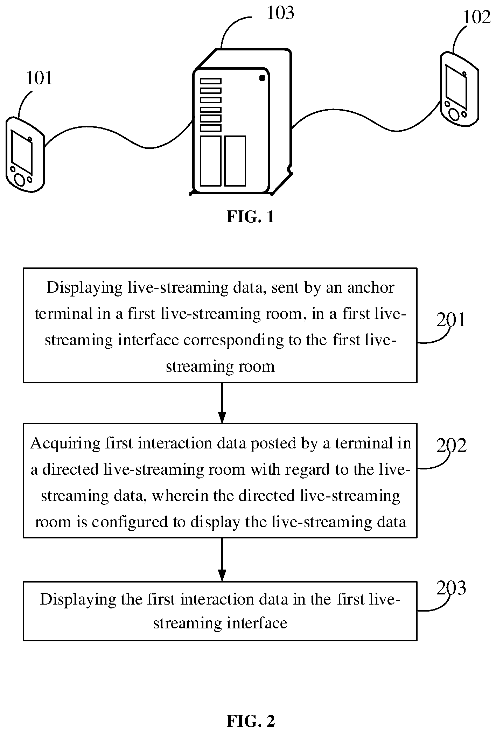

FIG. 1 is a schematic diagram of an implementation environment according to some embodiments of the present disclosure, which includes a first terminal 101, a second terminal 102 and a live-streaming server 103. The first terminal 101 is a terminal in a first live-streaming room, and the second terminal 102 is a terminal in a directed live-streaming room. The first terminal 101 includes an anchor terminal and an audience terminal in the first live-streaming room. The second terminal 102 includes an audience terminal and an anchor terminal in the directed live-streaming room. The first terminal 101 and the second terminal 102 is interacted with the live-streaming server 103 over network.

The first terminal 101 and the second terminal 102 may be various devices such as mobile phones, computers and tablet computers. The live-streaming server 103 may be one server, or a server cluster composed of several servers, or a cloud computing service center.

The first terminal 101 displays, in a first live-streaming interface, live-streaming data sent by the anchor terminal in the first live-streaming room, and the second terminal 102 displays, in a directed live-streaming interface, the live-streaming data sent by the anchor terminal in the first live-streaming room. In response to acquiring interaction data posted into the directed live-streaming interface, the second terminal 102 sends the interaction data to the live-streaming server 103, and the live-streaming server 103 sends the interaction data to the first terminal 101. In response to acquiring the interaction data, the first terminal 101 displays the interaction data in the first live-streaming interface. Thus, the interaction data posted into the directed live-streaming interface is displayed in the first live-streaming interface.

In some embodiments, both the first terminal 101 and the second terminal 102 are provided with application clients associated with the live-streaming server 103, and the live-streaming server 103 provides serves for the application clients.

The application client has a live-streaming function, and thus can display the live-streaming data and the interaction data with regard to the live-streaming data.

In some embodiments, a first application client is installed in the first terminal 101, and a second application client is installed in the second terminal 102. The live-streaming server 103 includes a first live-streaming server and a second live-streaming server between which a communication connection is established. The first application client is associated with the first live-streaming server, and the first live-streaming server provides services for the first application client; and the second application client is associated with the second live-streaming server, and the second live-streaming server provides services for the second application client.

The first application client and the second application client are different clients, and both of them have live-streaming functions, and thus can display the live-streaming data and the interaction data with regard to the live-streaming data.

Referring to FIG. 2, which is a flowchart of a method for displaying interaction data according to some embodiments of the present disclosure, the method is applied to a terminal and includes the following steps.

In 201, live-streaming data sent by an anchor terminal in a first live-streaming room is displayed in a first live-streaming interface corresponding to the first live-streaming room.

In 202, first interaction data posted by a terminal in a directed live-streaming room with regard to the live-streaming data is acquired, wherein the directed live-streaming room is configured to display the live-streaming data.

In 203, the first interaction data is displayed in the first live-streaming interface.

In the method according to the present embodiment, a terminal in the first live-streaming room can display the live-streaming data in the first live-streaming interface and can display, in the first live-streaming room, the first interaction data from the directed live-streaming room by acquiring the first interaction data posted by the terminal in the directed live-streaming room with regard to the live-streaming data, such that the first interaction data can be displayed across the live-streaming rooms, and the information quantity of the interaction data displayed in the first live-streaming interface is increased, thereby improving the interactive effect.

In some embodiments, the acquiring the first interaction data posted by the terminal in the directed live-streaming room with regard to the live-streaming data includes:

receiving the first interaction data sent from a live-streaming server, wherein the first interaction data is sent to the live-streaming server by the terminal.

In some embodiments, the method further includes:

sending the live-streaming data to a live-streaming server based on an anchor identifier of the first live-streaming room, wherein the live-streaming data is published into the first live-streaming room and the directed live-streaming room by the live-streaming server.

In some embodiments, the displaying the first interaction data in the first live-streaming interface includes at least one of:
adding a directing sign to the first interaction data, and displaying the first interaction data added with the directing sign in the first live-streaming interface;
displaying, in the first live-streaming interface, the first interaction data in a target displaying style; or
displaying the first interaction data and a directed-audience identifier in the first live-streaming interface, wherein the directed-audience identifier is a virtual audience identifier registered for the directed live-streaming room in the first live-streaming room.

In some embodiments, the method further includes:
acquiring second interaction data posted by a terminal in the first live-streaming room with regard to the live-streaming data; and
displaying the first interaction data in the first live-streaming interface includes:
displaying the first interaction data and the second interaction data in the first live-streaming interface.

In some embodiments, the displaying the first interaction data and the second interaction data in the first live-streaming interface includes at least one of:
displaying, in the first live-streaming interface, the first interaction data and the second interaction data in different displaying styles; or
displaying the first interaction data and the second interaction data in different displaying regions of the first live-streaming interface.

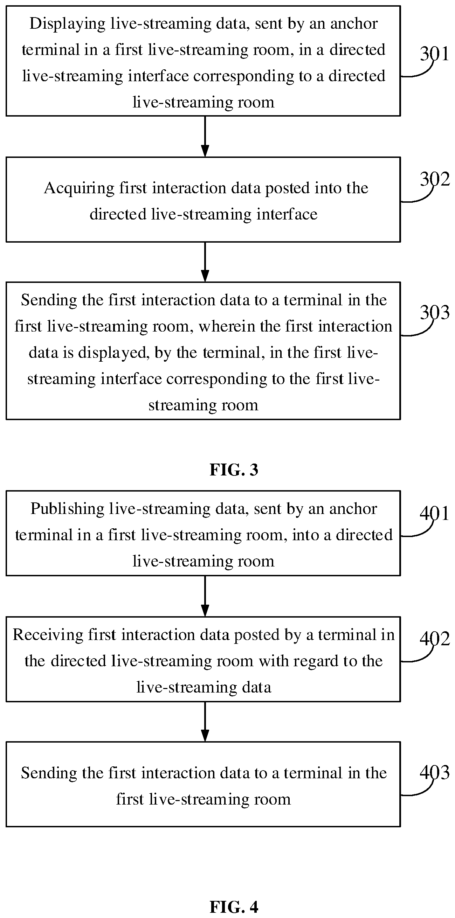

Referring to FIG. 3, which is a flowchart of another method for displaying interaction data according to some embodiments of the present disclosure, the method is applied to a terminal and includes the following steps.

In 301, live-streaming data sent by an anchor terminal in a first live-streaming room is displayed in a directed live-streaming interface corresponding to a directed live-streaming room.

In 302, first interaction data posted into the directed live-streaming interface is acquired.

In 303, the first interaction data is sent to a terminal in the first live-streaming room, wherein the first interaction data is displayed, by the terminal, in a first live-streaming interface corresponding to the first live-streaming room.

In the method according to the present embodiment, a terminal in the directed live-streaming room displays, in the directed live-streaming interface, the live-streaming data from the first live-streaming room and sends the first interaction data posted into the directed live-streaming interface to the terminal in the first live-streaming room, such that the terminal in the first live-streaming room can display, in the first live-streaming interface corresponding to the first live-streaming room, the first interaction data form the directed live-streaming room. Thus, the first interaction data can be displayed across the live-streaming rooms, and the information quantity of the data displayed in the first live-streaming interface is increased, thereby improving the interactive effect.

In some embodiments, the method further includes:
receiving the live-streaming data sent from a live-streaming server, wherein the live-streaming data is sent to the live-streaming server by the anchor terminal in the first live-streaming room.

In some embodiments, the sending the first interaction data to the terminal in the first live-streaming room includes:
acquiring a live-streaming schedule of the directed live-streaming room, wherein the live-streaming schedule includes a correspondence relationship between a live-streaming room identifier and a time period;
determining, according to a current time point and the live-streaming schedule, a live-streaming room identifier corresponding to the time period to which the current time point belongs, wherein the live-streaming room identifier is configured to indicate the first live-streaming room; and
sending an interaction message to the live-streaming server, wherein the interaction message includes the first interaction data and the live-streaming room identifier, and the first interaction data is sent, by the live-streaming server, to the terminal in the first live-streaming room.

Referring to FIG. 4, which is a flowchart of yet another method for displaying interaction data according to some embodiments of the present disclosure, the method is applied to a server and includes the following steps.

In 401, live-streaming data sent by an anchor terminal in a first live-streaming room is published into a directed live-streaming room.

In 402, first interaction data post by a terminal in the directed live-streaming room with regard to the live-streaming data is received.

In 403, the first interaction data is sent to a terminal in the first live-streaming room.

In the method according to the present embodiment, the live-streaming server publishes, in the directed live-streaming room, the live-streaming data sent by the anchor terminal into the first live-streaming room, and sends the first interaction data posted by the terminal in the directed live-streaming room with regard to the live-streaming data to the terminal in the first live-streaming room, such that the terminal in the first live-streaming room can display, in a first live-streaming interface corresponding to the first live-streaming room, the first interaction data from the directed live-streaming room. Thus, the first interaction data can be displayed across the live-streaming rooms, and the information quantity of the interaction data displayed in the first live-streaming interface is increased, thereby improving the interactive effect.

In some embodiments, the publishing the live-streaming data, sent by the anchor terminal into the first live live-streaming room, into the directed live-streaming room includes:
acquiring an audience identifier set of the first live-streaming room, wherein the audience identifier set includes a directed-audience identifier registered for the directed live-streaming room; and
publishing the live-streaming data into the directed live-streaming room based on the directed-audience identifier.

In some embodiments, the receiving the first interaction data posted by the terminal in the directed live-streaming room with regard to the live-streaming data includes:
receiving, by a directing server, the first interaction data sent by a terminal in the directed live-streaming room, wherein the directing server corresponds to the directed live-streaming room;
sending, by the directing server, the first interaction data to a first server, wherein the first server corresponds to the first live-streaming room; and
sending the first interaction data to the terminal in the first live-streaming room includes:
sending, by the first server, the first interaction data to the terminal in the first live-streaming room.

In some embodiments, the receiving the first interaction data posted by the terminal in the directed live-streaming room with regard to the live-streaming data includes:
receiving, by a first server, the first interaction data sent by the terminal in the directed live-streaming room, wherein the first server corresponds to the first live-streaming room; and
the sending the first interaction data to the terminal in the first live-streaming room includes:
sending, by the first server, the first interaction data to the terminal in the first live-streaming room.

In some embodiments, the publishing the live-streaming data, sent by the anchor terminal in the first live-streaming room, into the directed live-streaming room includes:
acquiring an audience identifier set of the directed live-streaming room, wherein the audience identifier set includes at least one audience identifier; and
sending the live-streaming data to an audience terminal corresponding to the at least one audience identifier.

In some embodiments, the sending the first interaction data to the terminal in the first live-streaming room includes:
sending an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, the method further includes:
acquiring a live-streaming schedule of the directed live-streaming room, wherein the live-streaming schedule includes a correspondence relationship between a live-streaming room identifier and a time period;
determining, according to a current time point and the live-streaming schedule, the live-streaming room identifier corresponding to the time period to which the current time point belongs; and
registering the directed-audience identifier for the directed live-streaming room in the first live-streaming room indicated by the live-streaming room identifier.

In some embodiments, the method further includes:
de-registering the directed-audience identifier in the first live-streaming room in response to a change of the live-streaming identifier as determined; and
registering a directed-audience identifier for the directed live-streaming room in a second live-streaming room indicated by the live-streaming identifier as changed.

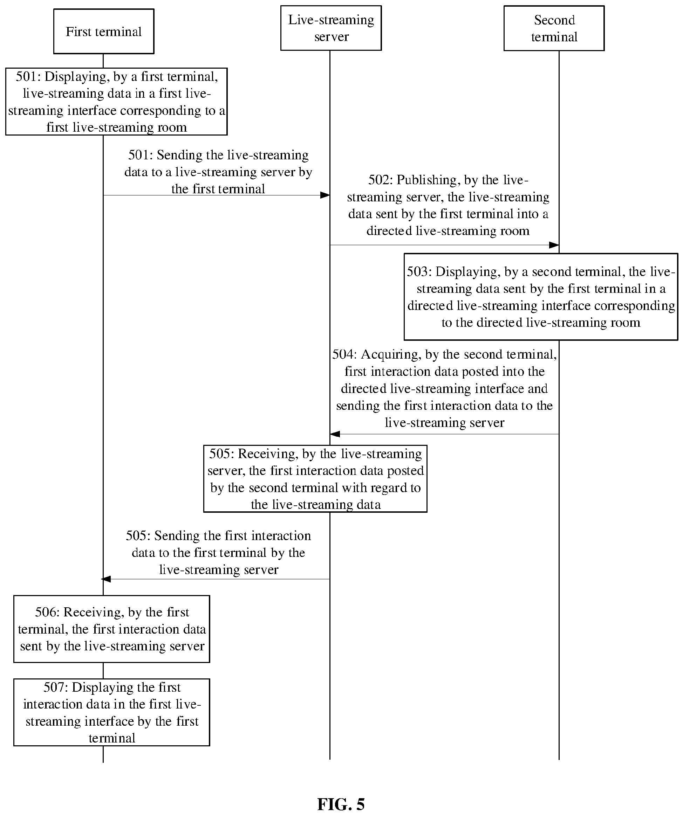

Referring to FIG. 5, which is a flowchart of still another method for displaying interaction data according to some embodiments of the present disclosure, the execution subjects of the method include a first terminal, a second terminal and a live-streaming server, the method includes the following steps.

**In 501, the first terminal displays live-streaming data in a first live-streaming interface corresponding to a first live-streaming room, and sends the live-streaming data to a live-streaming server.**

The first terminal is an anchor terminal in the first live-streaming room, and when an anchor carries out a live stream, the live-streaming data is collected by the first terminal. The first terminal displays the live-streaming data as collected in the first live-streaming interface corresponding to the first live-streaming room, and sends the live-streaming data to the live-streaming server.

The live-streaming data includes video data, audio data, image data, text data, etc., and is collected by a camera device, a recording device and other input devices of the anchor terminal. For example, the video data is acquired by collecting pictures and sounds on a scene via the camera component of the first terminal; or the video data is acquired by recording a picture that is currently being displayed by the first terminal. In some embodiments, the first terminal acquires the live-streaming data by adding watermarks, beautifiers and special-effect filters to the collected video data.

The live-streaming room is configured to output the live-streaming data or other data generated during the live stream, and the live-streaming room includes a live-streaming room identifier, an anchor identifier, a live-streaming interface corresponding to the live-streaming room. The live-streaming room identifier is intended to represent the live-streaming room and is the serial number of the live-streaming room, the name of the live-streaming room, a nickname of the anchor in the live-streaming room, etc. The anchor identifier is intended to represent the identity of the anchor, and is a nickname of the anchor, the name of the anchor, the phone number of the anchor, etc., and the anchor identifiers are in one-to-one correspondence with the live-streaming room identifiers. The live-streaming interface is configured to display the live-streaming data and interaction data. A user who wants to visit a certain live-streaming room may trigger an access request for the live-streaming room, and the access request carries the live-streaming room identifier or the anchor identifier. The terminal displays the live-streaming interface corresponding to the live-streaming room identifier or the anchor identifier in response to the access request.

In the present embodiment, the first live-streaming room refers to a live-streaming room created by the anchor via the first terminal. The first live-streaming interface corresponding to the first live-streaming room is configured to display the live-streaming data posted by the first terminal, and the first live-streaming interface is further configured to display the interaction data of the live-streaming data. The first live-streaming interface also displays the live-streaming room identifier and the anchor identifier of the first live-streaming room, the number of current audience in the first live-streaming room, and other data. In addition, the first live-streaming interface further includes an exit button, a comment input box, a gift button, a share button, a like button and other functional buttons. The exit button is configured to exit the first live-streaming interface, the comment input box is configured to input and send comment interaction data, the gift button is configured to send gift interaction data, the share button is configured to share the current first live-streaming room, and the like button is configured to give a like to the first live-streaming room.

In some embodiments, the first terminal determines the anchor identifier of the first live-streaming room as currently logged-on in response to acquiring the live-streaming data, and the first terminal sends the live-streaming data to the live-streaming server based on the anchor identifier of the first live-streaming room.

In some embodiments, an application client for live streaming is installed on the first terminal and associated with the live-streaming server. The anchor identifier is logged in at the application client of the first terminal, the first terminal displays the first live-streaming interface corresponding to the first live-streaming room in response to detecting a live-streaming request by the application client, and simultaneously collects the live-streaming data. The first terminal displays the live-streaming data in the first live-streaming interface based on the acquired live-streaming data, and sends the live-streaming data to the live-streaming server based on the anchor identifier.

**In 502, the live-streaming server publishes the live-streaming data, sent by the first terminal, into a directed live-streaming room.**

The live-streaming server receives the live-streaming data sent by the first terminal and publishes the live-streaming data into the directed live-streaming room, i.e., determines the second terminal in the directed live-streaming room and sends the live-streaming data to the second terminal.

In the present embodiment, the second terminal is an audience terminal in the directed live-streaming room. The directed live-streaming room is a live-streaming room created by the live-streaming server, rather than a live-streaming room created by the live-streaming server at the request of an anchor terminal. Therefore, there may be no anchor terminal in the directed live-streaming room, and the directed live-streaming room is configured to display the live-streaming data of at least one other live-streaming room.

In some embodiments, the directed live-streaming room displays the live-streaming data of other live-streaming rooms in chronological order, or displays the live-streaming data of other live-streaming rooms by other means.

The directed live-streaming room determines which live-streaming data of live-streaming rooms to display according to the types of the live-streaming rooms, and the types of the live-streaming rooms refer to the types of the live-streaming data displayed by the live-streaming rooms. For example, the types of the live-streaming rooms include a song and dance live-streaming room, a game live-streaming room, etc. The song and dance live-streaming room is configured to display live-streaming data of songs and dances, and the game live-streaming room is configured to display live-streaming data of games. In the case that the directed live-streaming room is a song and dance directed live-streaming room, the live-streaming data in the song and dance live-streaming room can be displayed in the directed live-streaming room.

In some embodiments, the live-streaming server stores a live-streaming schedule of the directed live-streaming room, and the live-streaming schedule includes a correspondence relationship between the live-streaming room identifier and a time period, and indicates that the directed live-streaming room displays, in any time period, the live-streaming data of the live-streaming room corresponding to the time period. For example, referring to the correspondence relationship between the live-streaming room identifier and the time period in Table 1, in the time period from 13:00 to 14:00, the live-streaming data corresponding to a live-streaming room identifier A will be displayed in the directed live-streaming room; in the time period from 14:00 to 15:00, the live-streaming data corresponding to a live-streaming room identifier B will be displayed in the directed live-streaming room; and in the time period from 15:00 to 16:00, the live-streaming data corresponding to a live-streaming room identifier C will be displayed in the directed live-streaming room.

**Table 1**

| 13:00 to 14:00 | 14:00 to 15:00 | 15:00 to 16:00 |
|---|---|---|
| Live-streaming room identifier A | Live-streaming room identifier B | Live-streaming room identifier C |

Therefore, the live-streaming server may acquire the live-streaming schedule of the directed live-streaming room, and determine, according to a current time point and the live-streaming schedule, the live-streaming room identifier corresponding to the time period to which the current time point belongs. The live-streaming server registers a directed-audience identifier for the directed live-streaming room in the first live-streaming room indicated by the live-streaming room identifier. Thus, the live-streaming server may acquire an audience identifier set of the first live-streaming room in response to receiving the live-streaming data, the audience identifier set includes the directed-audience identifier registered for the directed live-streaming room, and publishes the live-streaming data into the directed live-streaming room according to the directed-audience identifier.

That is, the live-streaming server acquires the audience identifier set of the first live-streaming room in response to receiving the live-streaming data sent by the first terminal. In the case that the audience identifier set of the first live-streaming room includes the directed-audience identifier, the directed live-streaming room is determined according to the directed-audience identification, the audience identifier set of the directed live-streaming room is acquired, and the live-streaming data is sent to the audience terminal corresponding to the audience identifier set of the directed live-streaming room; and in the case that the audience identifier set of the first live-streaming room does not include the directed-audience identifier, it is unnecessary to publish the live-streaming data into the directed live-streaming room.

Registering the directed-audience identifier in the first live-streaming room means that the directed-audience identifier is added to the audience identifier set of the first live-streaming room. The audience identifier set of the first live-streaming room includes the audience identifier of at least one audience watching the first live-streaming room.

The directed-audience identifier is a virtual audience identifier registered for the directing live-streaming room in the first live-streaming room, rather than the audience identifier of the real audience. The directed-audience identifier indicates the directed live-streaming room, which is equivalent to indicating at least one audience in the directed live-streaming room. The directed-audience identifier is the name, serial number, etc. of the directed live-streaming room. For example, in the case that the audience identifier set of a certain live-streaming room includes the directed live-streaming room identifier, at least one audience in the directed live-streaming room is watching the live-streaming data of the live-streaming room.

In some embodiments, the live-streaming server determines the corresponding live-streaming room identifier according to the time period to which the current time point belongs, de-registers the directed-audience identifier in the first live-streaming room in response to a change of the live-streaming room identifier as determined, and registers the directed-audience identifier for the directed live-streaming room in the second live-streaming room indicated by the live-streaming room identifier as changed. De-registering the directed-audience identifier in the first live-streaming room means that the directed-audience identifier in the audience identifier set in the first live-streaming room is removed.

For example, in response to determining the corresponding live-streaming room identifier A at 13:00, the live-streaming server registers the directed-audience identifier in the live-streaming room A indicated by the live-streaming room identifier A, i.e., adds the directed-audience identifier to the audience identifier set of the live-streaming room A, and publishes the live-streaming data of the live-streaming room A into the directed live-streaming room. When the live-streaming server determines the corresponding live-streaming room identifier B at 14:00, the live-streaming room identifier corresponding to the time period to which the current time point belongs changes, and the live-streaming server de-registers the directed-audience identifier in live-streaming room A, i.e., removes the directed-audience identifier in the audience identifier set of the live-streaming room A. In addition, the directed-audience identifier of the directed live-streaming room is registered in the live-streaming room B indicated by the live-streaming room identifier B, i.e., the directed-audience identifier is added to the audience identifier set of the live-streaming room B, and the live-streaming data of the live-streaming room B is published into the directed live-streaming room.

In some embodiments, the live-streaming server acquires the audience identifier set of the directed live-streaming room in response to receiving the live-streaming data, the audience identifier set includes at least one audience identifier, the at least one audience identifier in the audience identifier set is an identifier of the audience watching the directed live-streaming room, and then the live-streaming server sends the live-streaming data to the audience terminal corresponding to the at least one audience identifier.

In some embodiments, the live-streaming server publishes the live-streaming data into the first live-streaming room and the directed live-streaming room.

The live-streaming server acquires the audience identifier set of the first live-streaming room in response to receiving the live-streaming data sent by the first terminal, the audience identifier set of the first live-streaming room includes the directed-audience identifier and at least one audience identifier of the first live-streaming room. The live-streaming server determines the directed live-streaming room according to the directed-audience identifier, and acquires the audience identifier set of the directed live-streaming room. The audience identifier set of the directed live-streaming room includes at least one audience identifier of the directed live-streaming room. The live-streaming server sends the live-streaming data to the audience terminal corresponding to the audience identifier of the first live-streaming room and the audience terminal corresponding to the audience identifier of the directed live-streaming room.

It should be noted that in the present embodiment, the second terminal is only taken as an example of the audience terminal in the directed live-streaming room for explanation. In another embodiment, the second terminal further includes an anchor terminal in the directed live-streaming room. The anchor terminal in the directed live-streaming room sends the live-streaming data to the live-streaming server, and the live-streaming server publishes the live-streaming data of the directed live-streaming room and the first live-streaming room into the directed live-streaming room simultaneously, such that the first terminal displays the live-streaming data from the directed live-streaming room and the first live-streaming room in different regions of the directed live-streaming interface simultaneously. Therefore, the audience in the directed live-streaming room can watch the live-streaming data of the first live-streaming room and the directed live-streaming room at the same time, which is beneficial to improving the richness of a live stream and enhancing a live-streaming effect. For example, the live-streaming data of the directed live-streaming room includes comments, explanations and interactions of the anchor of the directed live-streaming room with regard to the live-streaming data of the first live-streaming room.

**In 503, the second terminal displays the live-streaming data, sent by the first terminal, in a directed live-streaming interface corresponding to the directed live-streaming room.**

The second terminal displays the live-streaming data in the directed live-streaming interface corresponding to the directed live-streaming room in response to receiving the live-streaming data sent from the live-streaming server.

In some embodiments, an application client for live streaming is installed on the audience terminal in the directed live-streaming room and associated with the live-streaming server. The audience identifier is logged in at the application client of the audience terminal, the audience terminal displays the directed live-streaming interface corresponding to the directed live-streaming room in response to detecting an access request to the directed live-streaming room by the application client, and at the same time, sends the access request carrying both the audience identifier and the live-streaming room identifier to the live-streaming server, and the live-streaming server adds the audience identifier to the audience identifier set of the directed live-streaming room indicated by the live-streaming room identifier in response to receiving a live-stream watching request. Thus, the audience terminal in the directed live-streaming room can receive the live-streaming data sent from the live-streaming server and display the live-streaming data in the directed live-streaming interface.

In some embodiments, the first terminal displays the live-streaming data in the first live-streaming interface corresponding to the first live-streaming room by the application client, and the second terminal displays the live-streaming data, sent by the first terminal, in the directed live-streaming interface corresponding to the directed live-streaming room by the application client. The application client installed on the first terminal and the application client installed on the second terminal belong to the same type of application clients, or belong to different types of application clients.

**In 504, the second terminal acquires first interaction data posted into the directed live-streaming interface and sends the first interaction data to the live-streaming server.**

The second terminal displays the live-streaming data, sent by the first terminal, in the directed live-streaming interface. The audience in the live-streaming room watches the live-streaming data via the directed live-streaming interface, and the audience who wants to interact posts the first interaction data with regard to the live-streaming data into the directed live-streaming interface. Therefore, in the process of displaying the live-streaming data, the second terminal can acquire the first interaction data posted into the directed live-streaming interface and send the first interaction data to the live-streaming server.

The interaction data includes input comment data, virtual gifts, dynamic special effects, etc. For example, the audience input the comment data in a comment input box of the directed live-streaming interface, the second terminal acquires the comment data based on the user's operation, and sends the comment data to the live-streaming server, and the live-streaming server subsequently releases the comment data into the directed live-streaming room or the first live-streaming room, and displays the comment data in the corresponding live-streaming interface; or, the audience select any virtual gift in the directed live-streaming interface, the second terminal acquires the virtual gift based on the user's operation and sends the virtual gift to the live-streaming server, and the live-streaming server subsequently adds the virtual gift to a gift database of the anchor, releases the virtual gift into the directed live-streaming room or the first live-streaming room, and displays the virtual gift in the corresponding live-streaming interface; or, the audience select any dynamic special effect in the directed live-streaming interface, the second terminal acquires the dynamic special effect based on the user's operation, and sends the dynamic special effect to the live-streaming server, and the live-streaming server subsequently adds the dynamic special effect to the live-streaming data, releases the live-streaming data added with the dynamic special effect into the directed live-streaming room or the first live-streaming room, and displays the live-streaming data added with the dynamic special effect in the corresponding live-streaming interface.

In some embodiments, the second terminal stores the live-streaming schedule of the directed live-streaming room, and the live-streaming schedule includes a correspondence relationship between the live-streaming room identifier and a time period, and indicates that the directed live-streaming room displays, in any time period, the live-streaming data of the live-streaming room corresponding to the time period. Therefore, the terminal in the directed live-streaming room acquires the live-streaming schedule of the directed live-streaming room in response to acquiring the first interaction data, and determines, according to the current time point and the live-streaming schedule, the live-streaming room identifier corresponding to the time period to which the current time point belongs, and the live-streaming room identifier is intended to indicate the first live-streaming room. Then, the second terminal sends an interaction message carrying both the first interaction data and the live-streaming room identifier to the live-streaming server, and the live-streaming server sends the first interaction data to the terminal in the first live-streaming room.

The second terminal determines the live-streaming room identifier corresponding to the current time point, and the live-streaming data displayed in the directed live-streaming interface comes from the first terminal indicated by the live-streaming room identifier. Therefore, the second terminal generates the interaction message carrying both the first interaction data and the live-streaming room identifier, and sends the interaction message to the live-streaming server, and the live-streaming server sends the first interaction data in the interaction message to the first terminal and the audience terminal in the first live-streaming room according to the live-streaming room identifier in the interaction message.

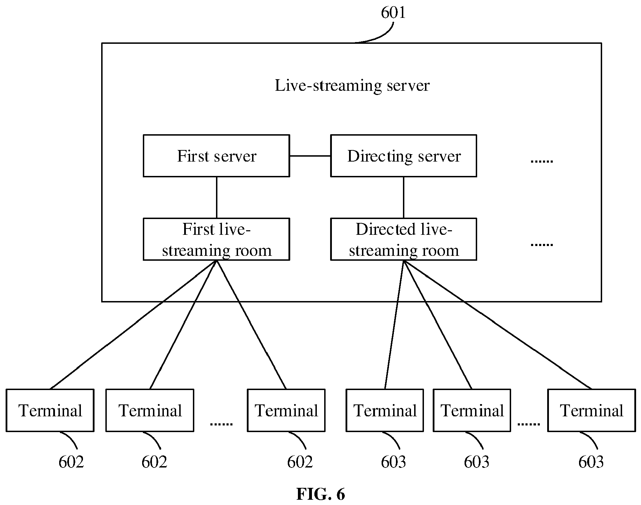

In some embodiments, the live-streaming server maintains a plurality of live-streaming rooms, each live-streaming room corresponds to one server, and the server performs operations associated with the live-streaming room. As shown in FIG. 6, in the present embodiment, the live-streaming server 601 at least includes a first server and a directing server; the first server corresponds to the first live-streaming room; the first live-streaming rooms correspond to a plurality of terminals 602 in the first live-streaming rooms; the directing server corresponds to the directed live-streaming room; and the directed live-streaming rooms correspond to a plurality of terminals 603 in the directed live-streaming room.

The second terminal sends the first interaction data to the directing server corresponding to the directed live-streaming room. Or, the second terminal determines the live-streaming room identifier corresponding to the current time point according to the live-streaming schedule of the directed live-streaming room, and if the live-streaming room identifier indicates the first live-streaming room, the second terminal sends the first interaction data to the directing server corresponding to the directed live-streaming room and the first server corresponding to the first live-streaming room.

**In 505, the live-streaming server receives the first interaction data posted by the second terminal with regard to the live-streaming data and sends the first interaction data to the first terminal.**

In response to receiving the first interaction data posted by the second terminal with regard to the live-streaming data, the live-streaming server determines that the live-streaming data sent by the first terminal is currently being displayed in the directed live-streaming room, and then the live-streaming server sends the first interaction data to the first terminal.

In some embodiments, the live-streaming server maintains a plurality of live-streaming rooms, each live-streaming room corresponds to one server, and the server performs operations associated with the live-streaming room. The directing server corresponds to the directed live-streaming room, and the first server corresponds to the first live-streaming room.

Thus, the live-streaming server receives, by the directing server, the first interaction data sent by the second terminal, determines, by the directing server, that the live-streaming data sent by the first terminal is currently being displayed in the directed live-streaming room, and sends, by the directing server, the first interaction data to the first server corresponding to the first live-streaming room. In response to the first server receiving the first interaction data, the live-streaming server sends the first interaction data to the first terminal by the first server.

Alternatively, the live-streaming server directly receives, by the first server, the first interaction data sent by the second terminal, and sends the first interaction data to the first terminal by the first server.

In some embodiments, the live-streaming server registers the directed-audience identifier for the directed live-streaming room in the first live-streaming room. A reference may be made to 502 for the process. Thus, the live-streaming server sends the interaction message to the terminal in the first live-streaming room in response to receiving the first interaction data, and the interaction message includes the first interaction data and the directed-audience identifier.

In response to receiving the first interaction data sent by the second terminal, the live-streaming server acquires the directed-audience identifier of the directed live-streaming room, generates the interaction message including both the first interaction data and the directed-audience identifier, and sends the interaction message to the first terminal.

**In 506, the first terminal receives the first interaction data sent by the live-streaming server.**

In some embodiments, the first terminal receives the interaction message sent by the live-streaming server, and the interaction message includes the first interaction data and the directed-audience identifier.

In the present embodiment, by performing 505-507, the first interaction data posted by the second terminal with regard to the live-streaming data may be sent to the first terminal by the live-streaming server, such that the first terminal can acquire the first interaction data posted by the second terminal with regard to the live-streaming data. In another embodiment, the first terminal can also acquire the first interaction data posted by the second terminal with regard to the live-streaming data by other means.

**In 507, the first terminal displays the first interaction data in the first live-streaming interface.**

The first terminal displays the first interaction data in the first live-streaming interface corresponding to the first live-streaming room in response to receiving the first interaction data. Moreover, in response to receiving the first interaction data, the first terminal is still performing a live stream, such that the first interaction data and the live-streaming data will be simultaneously displayed in the first live-streaming interface.

In some embodiments, the first interaction data is displayed in at least one of the following forms.

**In a first form,** the first terminal adds a directing sign to the first interaction data, and displays the first interaction data added with the directing sign in the first live-streaming interface. The directing sign is intended to indicate that the first interaction data is the interaction data posted by the terminal in the directed live-streaming room with regard to the live-streaming data. For example, in the case that the first interaction data includes text interaction data, the directing sign is to make the text interaction data bold, add text color, add underline, etc.

**In a second form,** the first terminal displays the first interaction data in the first live-streaming interface in a target displaying style. The target displaying style is intended to indicate that the first interaction data is the interaction data posted by the terminal in the directed live-streaming room with regard to the live-streaming data. For example, the target displaying style is horizontal scrolling displaying, flashing displaying, fly-in displaying, etc.

**In a third form,** the first terminal displays the first interaction data and the directed-audience identifier in the first live-streaming interface, and the directed-audience identifier is the virtual audience identifier registered in the first live-streaming room for the directed live-streaming room, thus indicating that the first interaction data is the interaction data posted by the second terminal corresponding to the directed-audience identifier with regard to the live-streaming data.

The first terminal correspondingly displays the first interaction data and the directed-audience identifier in the first live-streaming interface in response to receiving the interaction message including both the first interaction data and the directed-audience identifier. For example, the first terminal displays the first interaction data and the directed-audience identifier in the same region.

In some embodiments, the first terminal displays the first interaction data and the second interaction data in the first live-streaming interface in response to acquiring the second interaction data posted by the terminal in the first live-streaming room with regard to the live-streaming data.

In some embodiments, the first interaction data and the second interaction data are displayed in at least one of the following ways.

**In a fourth form,** the first terminal displays the first interaction data and the second interaction data in the first live-streaming interface in different displaying styles. The first terminal determines a first displaying style and a second displaying style, displays the first interaction data in the first displaying style, and displays the second interaction data in the second displaying style, so as to determine whether the interaction data displayed in the first live-streaming interface comes from the first live-streaming room or the directed live-streaming room.

**In a fifth form,** the first terminal displays the first interaction data and the second interaction data in different displaying regions of the first live-streaming interface. The first terminal determines a first displaying region and a second displaying region, displays the first interaction data in the first displaying region of the first live-streaming interface, and displays the second interaction data in the second displaying region of the first live-streaming interface, so as to determine whether the interaction data displayed in the first live-streaming interface comes from the first live-streaming room or the directed live-streaming room.

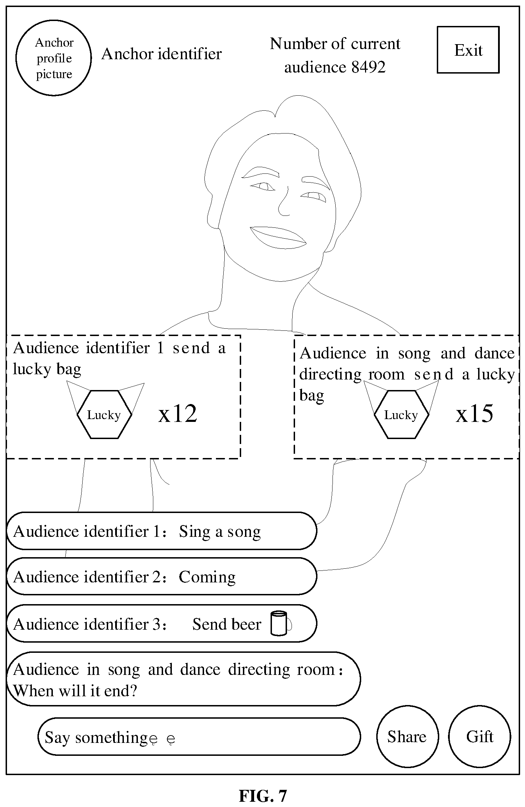

Referring to FIG. 7, which is a schematic diagram of displaying live-streaming data, first interaction data and second interaction data in a first live-streaming interface, the first live-streaming interface displays an anchor profile picture, an anchor identifier, the number of current audience, an exit button, a share button, a gift button and a comment input box, wherein the number of current audience refers to the number of audience watching the first live-streaming room. In addition, a live-streaming picture of first live-streaming data, as well as the acquired first interaction data and second interaction data, is displayed in the first live-streaming room.

The directed-audience identifier is "audience in a song and dance directing room", and corresponds to the first interaction data, while an audience identifier 1, an audience identifier 2 and an audience identifier 3 are audience identifiers in the first live-streaming room and correspond to the second interaction data. Text interaction data in the first interaction data is displayed corresponding to the directed-audience identifier; and text interaction data in the second interaction data is displayed corresponding to the audience identifier of the first live-streaming room. Gift interaction data in the first interaction data is displayed corresponding to the directed-audience identifier in a right region; and gift interaction data in the second interaction data is displayed corresponding to the audience identifier of the first live-streaming room in a left region.

It should be noted that in the present embodiment, the first terminal is taken as an example of an anchor terminal in the first live-streaming room to explain the process of displaying the first interaction data of the directed live-streaming room in the first live-streaming interface by interaction among the first terminal, the live-streaming server and the second terminal.

However, in another embodiment, the first terminal further includes an audience terminal in the first live-streaming room, such that the live-streaming server publishes the live-streaming data into the first live-streaming room and the directed live-streaming room in response to receiving the live-streaming data sent by the anchor terminal in the first live-streaming room. The audience terminal in the first live-streaming room displays the live-streaming data in the first live-streaming interface corresponding to the first live-streaming room, and the terminal in the directed live-streaming room displays the live-streaming data in the directed live-streaming interface corresponding to the directed live-streaming room. The terminal in the directed live-streaming room sends the first interaction data to the live-streaming server in response to acquiring the first interaction data posted into the directed live-streaming interface. The live-streaming server receives the first interaction data posted by the terminal into the directed live-streaming interface with regard to the live-streaming data, and sends the first interaction data to the anchor terminal and the audience terminal in the first live-streaming room. The anchor terminal and the audience terminal in the first live-streaming room display the first interaction data in the first live-streaming interface in response to receiving the first interaction data sent from the live-streaming server.

In the method provided by the present embodiment, the live-streaming server publishes the live-streaming data, sent by the terminal in the first live-streaming room, into the directed live-streaming room, and the audience in the directed live-streaming room can post the first interaction data with regard to the live-streaming data into the directed live-streaming interface corresponding to the directed live-streaming room, such that the terminal in the directed live-streaming room may send the first interaction data to the live-streaming server, and the live-streaming server may send the first interaction data to the terminal in the first live-streaming room. Therefore, the terminal in the first live-streaming room can also display, in the first live-streaming interface, the first interaction data in the directed live-streaming room in the process of displaying the live-streaming data in the first live-streaming interface corresponding to the first live-streaming room. Thus, the interaction data can be displayed across the live-streaming rooms, and the information quantity of the interaction data displayed in the first live-streaming interface is increased, thereby improving the interactive effect.

In addition, the first interaction data is displayed by adding the directing sign to the first interaction data; or, the first interaction data is displayed in the target displaying style; or, the first interaction data and the directed-audience identifier are displayed, or the first interaction data and the second interaction data are displayed in different displaying regions. Thus, the flexibility of displaying the interaction data is improved. Moreover, the first interaction data and the second interaction data can be distinguished from each other when the interaction data is displayed, which is beneficial for an anchor to make different responses to different interaction data, and makes the displaying mode of the interaction data more humanized.

Moreover, the live-streaming server may send the live-streaming data of the first live-streaming room to the terminal in the directed live-streaming room, and the terminal in the directing live-streaming room displays the live-streaming data, such that the live-streaming data can be displayed across the live-streaming rooms, thereby improving the live-streaming effect.

In addition, the terminal in the directed live-streaming room may send the first interaction data to the directing server, the directing server publishes the first interaction data into the directed live-streaming room and forwards the first interaction data to the first server, and the first server publishes the first interaction data into the first live-streaming room. Alternatively, the terminal in the directed live-streaming room may send the first interaction data to the directing server and the first server simultaneously, the directing server publishes the first interaction data into the directed live-streaming room, and the first server publishes the first interaction data into the first live-streaming room. Therefore, the present embodiment provides a way to publish the first interaction data of the directed live-streaming room into the first live-streaming room, thus improving the flexibility of displaying the first interaction data across the live-streaming rooms.

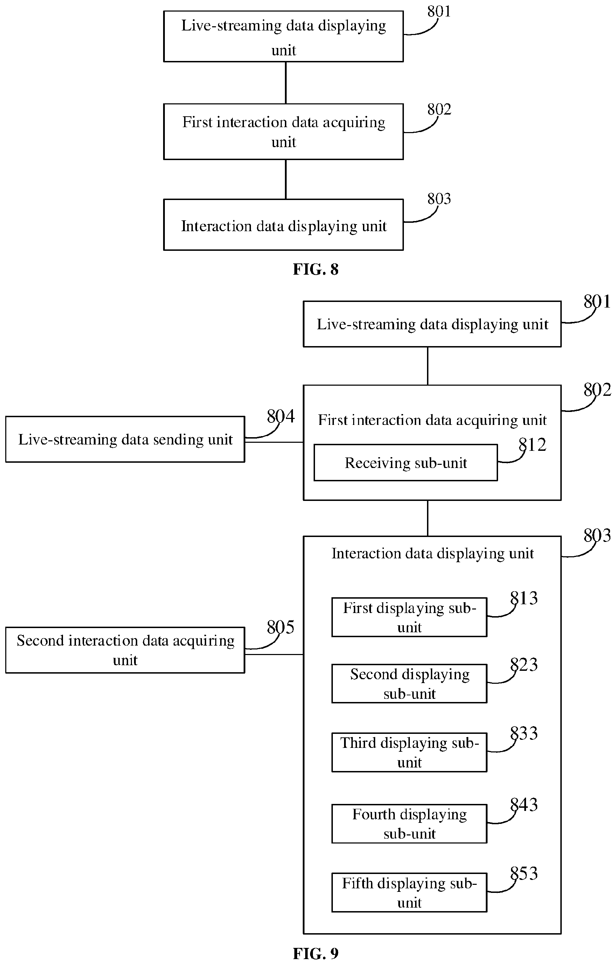

Referring to FIG. 8, which is a block diagram of an apparatus for displaying interaction data according to some embodiments of the present disclosure, the apparatus includes a live-streaming data displaying unit 801, a first interaction data acquiring unit 802 and an interaction data displaying unit 803, wherein
the live-streaming data displaying unit 801 is configured to display live-streaming data, sent by an anchor terminal in a first live-streaming room, in a first live-streaming interface corresponding to the first live-streaming room;
the first interaction data acquiring unit 802 is configured to acquire first interaction data posted by a terminal in a directed live-streaming room with regard to the live-streaming data, wherein the directed live-streaming room is configured to display the live-streaming data; and
the interaction data displaying unit 803 is configured to display the first interaction data in the first live-streaming interface.

In some embodiments, referring to FIG. 9, the first interaction data acquiring unit 802 includes:
a receiving sub-unit 812 configured to receive the first interaction data sent from a live-streaming server, wherein the first interaction data is sent to the live-streaming server by the terminal.

In some embodiments, referring to FIG. 9, the apparatus further includes:
a live-streaming data sending unit 804 configured to send the live-streaming data to a live-streaming server based on an anchor identifier of the first live-streaming room, wherein the live-streaming data is published into the first live-streaming room and the directed live-streaming room by the live-streaming server.

In some embodiments, referring to FIG. 9, the interaction data displaying unit 803 includes at least one of:
a first displaying sub-unit 813 configured to add a directing sign to the first interaction data, and display the first interaction data added with the directing sign in the first live-streaming interface;
a second displaying sub-unit 823 configured to display, in the first live-streaming interface, the first interaction data in a target displaying style; or
a third displaying sub-unit 833 configured to display the first interaction data and a directed-audience identifier in the first live-streaming interface, wherein the directed-audience identifier is a virtual audience identifier registered for the directed live-streaming room in the first live-streaming room.

In some embodiments, referring to FIG. 9, the apparatus further includes:
a second interaction data acquiring unit 805 configured to acquire second interaction data posted by a terminal in the first live-streaming room with regard to the live-streaming data; and
the interaction data displaying unit 803 is further configured to display the first interaction data and the second interaction data in the first live-streaming interface.

In some embodiments, referring to FIG. 9, the interaction data displaying unit 803 includes at least one of:
a fourth displaying sub-unit 843 configured to display, in the first live-streaming interface, the first interaction data and the second interaction data in different displaying styles; or
a fifth displaying sub-unit 853 configured to display the first interaction data and the second interaction data in different displaying regions of the first live-streaming interface.

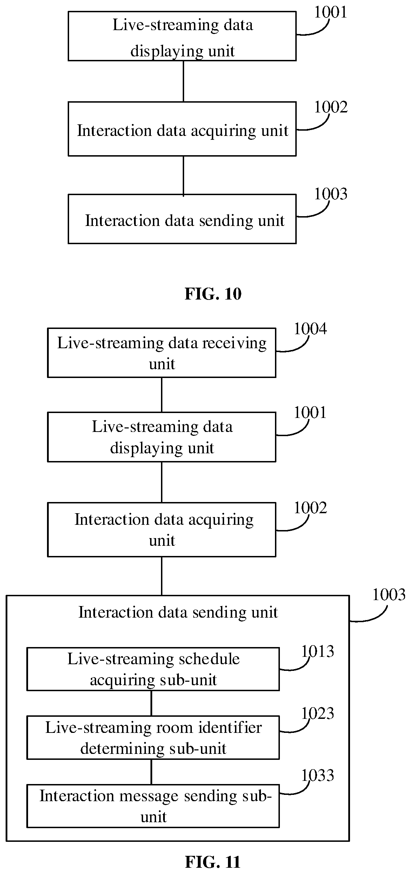

Referring to FIG. 10, which is a block diagram of an apparatus for displaying interaction data according to some embodiments of the present disclosure, the apparatus includes a live-streaming data displaying unit 1001, an interaction data acquiring unit 1002 and an interaction data sending unit 1003, wherein
the live-streaming data displaying unit 1001 is configured to display live-streaming data, sent by an anchor terminal in a first live-streaming room, in a directed live-streaming interface corresponding to a directed live-streaming room;
the interaction data acquiring unit 1002 is configured to acquire first interaction data posted into the directed live-streaming interface; and
the interaction data sending unit 1003 is configured to send the first interaction data to a terminal in the first live-streaming room, wherein the first interaction data is displayed, by the terminal, in a first live-streaming interface corresponding to the first live-streaming room.

In some embodiments, referring to FIG. 11, the apparatus further includes:
a live-streaming data receiving unit 1004 configured to receive the first interaction data sent from a live-streaming server, wherein the live-streaming data is sent to the live-streaming server by an anchor terminal in the first live-streaming room.

In some embodiments, referring to FIG. 11, the interaction data sending unit 1003 includes:
a live-streaming schedule acquiring sub-unit 1013 configured to acquire a live-streaming schedule of the directed live-streaming room, wherein the live-streaming schedule includes a correspondence relationship between a live-streaming room identifier and a time period;
a live-streaming room identifier determining sub-unit 1023 configured to configured to determine, according to a current time point and the live-streaming schedule, the live-streaming room identifier corresponding to the time period to which the current time point belongs, wherein the live-streaming room identifier is configured to indicate the first live-streaming room; and
an interaction message sending sub-unit 1033 configured to send an interaction message to the live-streaming server, wherein the interaction message includes the first interaction data and the live-streaming room identifier, and the first interaction data is sent, by the live-streaming server, to the terminal in the first live-streaming room.

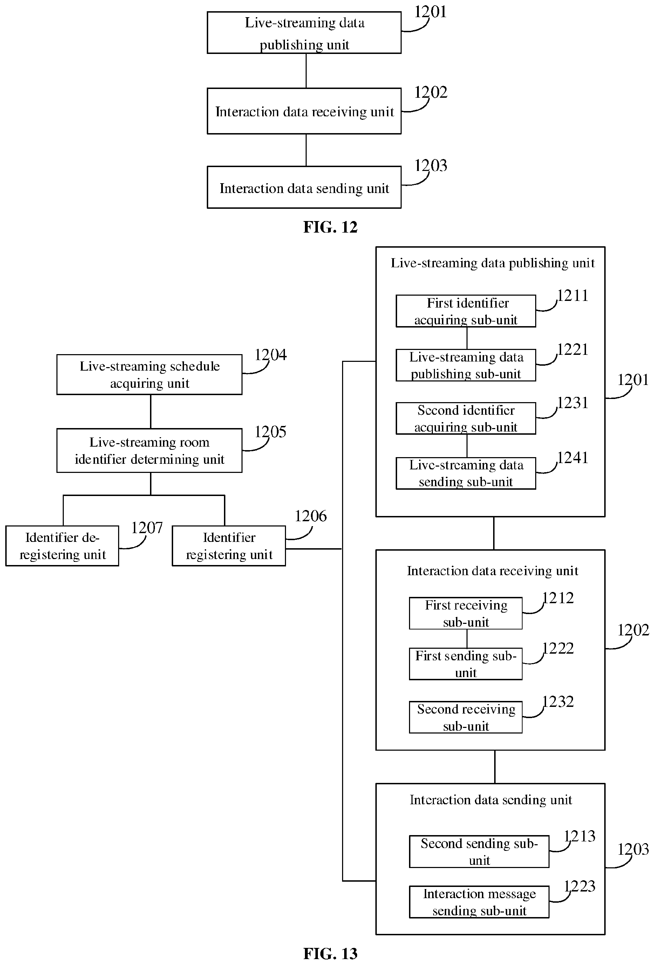

Referring to FIG. 12, which is a block diagram of an apparatus for displaying interaction data according to some embodiments of the present disclosure, the apparatus includes a live-streaming data publishing unit 1201, an interaction data receiving unit 1202 and an interaction data sending unit 1203, wherein
the live-streaming data publishing unit 1201 is configured to publish live-streaming data, sent by an anchor terminal in a first live-streaming room, into a directed live-streaming room;
the interaction data receiving unit 1202 is configured to receive first interaction data posted by a terminal in the directed live-streaming room with regard to the live-streaming data; and
the interaction data sending unit 1203 is configured to send the first interaction data to a terminal in the first live-streaming room.

In some embodiments, referring to FIG. 13, the live-streaming data publishing unit 1201 includes:
a first identifier acquiring sub-unit 1211 configured to acquire an audience identifier set of the first live-streaming room, wherein the audience identifier set includes a directed-audience identifier registered for the directed live-streaming room; and
a live-streaming data publishing sub-unit 1221 configured to publish the live-streaming data into the directed live-streaming room based on the directed-audience identifier.

In some embodiments, referring to FIG. 13, the interaction data receiving unit 1202 includes:
a first receiving sub-unit 1212 configured to receive, by a directing server, the first interaction data posted by the terminal in the directed live-streaming room, wherein the directing server corresponds to the directed live-streaming room;
a first sending sub-unit 1222 configured to send the first interaction data to a first server by the directing server, wherein the first server corresponds to the first live-streaming room; and
the interaction data sending unit 1203 includes:
   a second sending sub-unit 1213 configured to send, by the first server, the first interaction data to a terminal in the first live-streaming room.

In some embodiments, referring to FIG. 13, the interaction data receiving unit 1202 includes:
a second receiving sub-unit 1223 configured to receive, by a first server, the first interaction data sent by the terminal in the directed live-streaming room, wherein the first server corresponds to the first live-streaming room; and
the interaction data sending unit 1203 includes:
   a second sending sub-unit 1213 configured to send, by the first server, the first interaction data to the terminal in the first live-streaming room.

In some embodiments, referring to FIG. 13, the live-streaming data publishing unit 1201 includes:
a second identifier acquiring sub-unit 1231 configured to acquire an audience identifier set of the directed live-streaming room, wherein the audience identifier set includes at least one audience identifier; and
a live-streaming data sending sub-unit 1241 configured to send the live-streaming data to an audience terminal corresponding to the at least one audience identifier.

In some embodiments, referring to FIG. 13, the interaction data sending unit 1203 includes:
an interaction message sending sub-unit 1223 configured to send an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, referring to FIG. 13, the apparatus further includes:
a live-streaming schedule acquiring unit 1204 configured to acquire a live-streaming schedule of the directed live-streaming room, wherein the live-streaming schedule includes a correspondence relationship between a live-streaming room identifier and a time period;
a live-streaming room identifier determining unit 1205 configured to determine, according to a current time point and the live-streaming schedule, the live-streaming room identifier corresponding to the time period to which the current time point belongs; and
an audience identifier registering unit 1206 configured to register the directed-audience identifier for the directed live-streaming room in the first live-streaming room indicated by the live-streaming room identifier.

In some embodiments, referring to FIG. 13, the apparatus further includes:
an audience identifier de-registering unit 1207 configured to de-register the directed-audience identifier in the first live-streaming room in response to a change of the live-streaming identifier as determined; and
the audience identifier registering unit 1206 is further configured to register a directed-audience identifier for the directed live-streaming room in a second live-streaming room indicated by the live-streaming identifier as changed.

Some embodiments of the present disclosure provide a terminal, including at least one processor and a volatile or nonvolatile memory configured to store at least one instruction executable by the at least one processor,
wherein the at least one processor, when executing the at least one instruction, is caused to perform: displaying live-streaming data, sent by an anchor terminal in a first live-streaming room, in a first live-streaming interface corresponding to the first live-streaming room; acquiring first interaction data posted by a terminal in a directed live-streaming room with regard to the live-streaming data, wherein the directed live-streaming room is configured to display the live-streaming data; and displaying the first interaction data in the first live-streaming interface.

In some embodiments, the at least one processor, when executing the at least one instruction, is further caused to perform: receiving the first interaction data sent from a live-streaming server, wherein the first interaction data is sent to the live-streaming server by the terminal.

In some embodiments, the at least one processor, when executing the at least one instruction, is further caused to perform: sending the live-streaming data to a live-streaming server based on an anchor identifier of the first live-streaming room, wherein the live-streaming data is published into the first live-streaming room and the directed live-streaming room by the live-streaming server.

In some embodiments, the at least one processor, when executing the at least one instruction, is further caused to perform : adding a directing sign to the first interaction data, and displaying the first interaction data added with the directing sign in the first live-streaming interface; displaying, in the first live-streaming interface, the first interaction data in a target displaying style; or displaying the first interaction data and a directed-audience identifier in the first live-streaming interface, wherein the directed-audience identifier is a virtual audience identifier registered for the directed live-streaming room in the first live-streaming room.

In some embodiments, the at least one processor, when executing the at least one instruction, is further caused to perform: acquiring second interaction data posted by a terminal in the first live-streaming room with regard to the live-streaming data; and displaying the first interaction data and the second interaction data in the first live-streaming interface.

In some embodiments, the at least one processor, when executing the at least one instruction, is further caused to perform: displaying, in the first live-streaming interface, the first interaction data and the second interaction data in different displaying styles; or displaying the first interaction data and the second interaction data in different displaying regions of the first live-streaming interface.

Some embodiments of the present disclosure provide another terminal, including at least one processor and a volatile or nonvolatile memory configured to store at least one instruction executable by the at least one processor,
wherein the at least one processor, when executing the at least one instruction, is caused to perform: displaying live-streaming data, sent by an anchor terminal in a first live-streaming room, in a directed live-streaming interface corresponding to a directed live-streaming room; acquiring first interaction data posted into the directed live-streaming interface; and sending the first interaction data to a terminal in the first live-streaming room, wherein the first interaction data is displayed, by the terminal, in a first live-streaming interface corresponding to the first live-streaming room.

In some embodiments, the at least one processor, when executing the at least one instruction, is caused to perform: receiving the live-streaming data sent from a live-streaming server, wherein the live-streaming data is sent to the live-streaming server by the anchor terminal in the first live-streaming room.

In some embodiments, the at least one processor, when executing the at least one instruction, is caused to perform: acquiring a live-streaming schedule of the directed live-streaming room, wherein the live-streaming schedule includes a correspondence relationship between a live-streaming room identifier and a time period; determining, according to a current time point and the live-streaming schedule, the live-streaming room identifier corresponding to the time period to which the current time point belongs, wherein the live-streaming room identifier is configured to indicate the first live-streaming room; and sending an interaction message to the live-streaming server, wherein the interaction message includes the first interaction data and the live-streaming room identifier, and the first interaction data is sent, by the live-streaming server, to the terminal in the first live-streaming room.

FIG. 4 is a structural block diagram of a terminal 1400 according to some embodiments of the present disclosure. The terminal 1400 may be a smart phone, a tablet computer, a moving picture experts group audio layer III (MP3) player, a moving picture experts group audio layer IV (MP4) player, a laptop or a desk computer. The terminal 1400 may also be called user equipment (UE), a portable terminal, a laptop terminal, a desk terminal, etc.

Generally, the terminal 1400 includes one or more processors 1401 and one or more memories 1402.

The processor 1401 may include one or more processing cores, such as a 4-core processor and an 8-core processor. The processor 1401 may be formed by at least one hardware of a digital signal processing (DSP), a field-programmable gate array (FPGA), and a programmable logic array (PLA). The processor 1401 may also include a main processor and a coprocessor. The main processor is a processor for processing the data in an awake state, and is also called a central processing unit (CPU). The coprocessor is a low-power-consumption processor for processing the data in a standby state. In some embodiments, the processor 1401 may be integrated with a graphics processing unit (GPU), which is configured to render and draw the content that needs to be displayed by a display screen. In some embodiments, the processor 1401 may also include an artificial intelligence (AI) processor configured to process computational operations related to machine learning.

The memory 1402 may include one or more computer-readable storage mediums, which can be non-transitory. The memory 1402 may also include a volatile memory, as well as a non-volatile memory, such as one or more disk storage devices and flash storage devices. In some embodiments, the non-transitory computer-readable storage medium in the memory 1402 is configured to store at least one instruction. The at least one instruction is configured to be executed by the processor 1401 to implement the method for displaying interaction data according to the method embodiment of the present disclosure.

In some embodiments, the terminal 1400 also optionally includes a peripheral device interface 1403 and at least one peripheral device. The processor 1401, the memory 1402, and the peripheral device interface 1403 may be connected by a bus or a signal line. Each peripheral device may be connected to the peripheral device interface 1403 by a bus, a signal line or a circuit board. Specifically, the peripheral device includes at least one of a radio frequency circuit 1404, a display screen 1405, a camera component 1406, an audio circuit 1407, a positioning component 1408 and a power source 1409.

The peripheral device interface 1403 may be configured to connect at least one peripheral device associated with an input/output (I/O) to the processor 1401 and the memory 1402. In some embodiments, the processor 1401, the memory 1402 and the peripheral device interface 1403 are integrated on the same chip or circuit board. In some other embodiments, any one or two of the processor 1401, the memory 1402 and the peripheral device interface 1403 may be implemented on a separate chip or circuit board, which is not limited in the present embodiment.

The radio frequency circuit 1404 is configured to receive and transmit a radio frequency (RF) signal, which is also referred to as an electromagnetic signal. The radio frequency circuit 1404 communicates with a communication network and other communication devices via the electromagnetic signal. The radio frequency circuit 1404 converts the electrical signal into the electromagnetic signal for transmission, or converts the received electromagnetic signal into the electrical signal. Optionally, the radio frequency circuit 1404 includes an antenna system, an RF transceiver, one or more amplifiers, a tuner, an oscillator, a digital signal processor, a codec chipset, a subscriber identity module card, and the like. The radio frequency circuit 1404 can communicate with other terminals via at least one wireless communication protocol. The wireless communication protocol includes, but not limited to, the World Wide Web, a metropolitan area network, an intranet, various generations of mobile communication networks (2G, 3G, 4G, and 5G), a wireless local area network, and/or a wireless fidelity (WiFi) network. In some embodiments, the RF circuit 1404 may also include near field communication (NFC) related circuits, which is not limited in the present disclosure.

The display screen 1405 is configured to display a user interface (UI). The UI may include graphics, text, icons, videos, and any combination thereof. When the display screen 1405 is a touch display screen, the display screen 1405 also has the capacity to acquire touch signals on or over the surface of the display screen 1405. The touch signal may be input into the processor 1401 as a control signal for processing. At this time, the display screen 1405 may also be configured to provide virtual buttons and/or virtual keyboards, which are also referred to as soft buttons and/or soft keyboards. In some embodiments, one display screen 1405 may be disposed on the front panel of the terminal 1400. In some other embodiments, at least two display screens 1405 may be disposed respectively on different surfaces of the terminal 1400 or in a folded design. In further embodiments, the display screen 1405 may be a flexible display screen disposed on the curved or folded surface of the terminal 1400. Even the display screen 1405 may have an irregular shape other than a rectangle; that is, the display screen 1405 may be an irregular-shaped screen. The display screen 1405 may be an organic light-emitting diode (OLED) display screen.

The camera component 1406 is configured to capture images or videos. Optionally, the camera component 1406 includes a front camera and a rear camera. Usually, the front camera is placed on the front panel of the terminal, and the rear camera is placed on the back of the terminal. In some embodiments, at least two rear cameras are disposed, and are at least one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 1406 may also include a flashlight. The flashlight may be a mono-color temperature flashlight or a two-color temperature flashlight. The two-color temperature flash is a combination of a warm flashlight and a cold flashlight and can be used for light compensation at different color temperatures.

The audio circuit 1407 may include a microphone and a speaker. The microphone is configured to collect sound waves of users and environments, and convert the sound waves into electrical signals which are input into the processor 1401 for processing, or input into the RF circuit 1404 for voice communication. For the purpose of stereo acquisition or noise reduction, there may be a plurality of microphones respectively disposed at different locations of the terminal 1400. The microphone may also be an array microphone or an omnidirectional acquisition microphone. The speaker is then configured to convert the electrical signals from the processor 1401 or the radio frequency circuit 1404 into the sound waves. The speaker may be a conventional film speaker or a piezoelectric ceramic speaker. When the speaker is the piezoelectric ceramic speaker, the electrical signal can be converted into not only human-audible sound waves but also the sound waves which are inaudible to humans for the purpose of ranging and the like. In some embodiments, the audio circuit 1407 may also include a headphone jack.

The positioning component 1408 is configured to locate the current geographic location of the terminal 1400 to implement navigation or location based service (LBS). The positioning component 1408 may be the United States' Global Positioning System (GPS), Russia's Global Navigation Satellite System (GLONASS), China's BeiDou Navigation Satellite System (BDS), and the European Union's Galileo Satellite Navigation System (Galileo).

The power source 1409 is configured to power up various components in the terminal 1400. The power source 1409 may be alternating current, direct current, a disposable battery, or a rechargeable battery. When the power source 1409 includes the rechargeable battery, the rechargeable battery may a wired rechargeable battery or a wireless rechargeable battery. The rechargeable battery may also support the fast charging technology.

In some embodiments, the terminal 1400 also includes one or more sensors 1410. The one or more sensors 1410 include, but not limited to, an acceleration sensor 1411, a gyro sensor 1412, a pressure sensor 1413, a fingerprint sensor 1414, an optical sensor 1415 and a proximity sensor 1416.

The acceleration sensor 1411 may detect magnitudes of accelerations on three coordinate axes of a coordinate system established by the terminal 1400. For example, the acceleration sensor 1411 may be configured to detect components of a gravitational acceleration on the three coordinate axes. The processor 1401 may control the display screen 1405 to display a user interface in a landscape view or a portrait view according to a gravity acceleration signal collected by the acceleration sensor 1411. The acceleration sensor 1411 may also be configured to collect motion data of a game or a user.

The gyro sensor 1412 can detect a body direction and a rotation angle of the terminal 1400, and can cooperate with the acceleration sensor 1411 to collect a 3D motion of the user on the terminal 1400. Based on the data collected by the gyro sensor 1412, the processor 1401 can serve the following functions: motion sensing (such as changing the UI in response to a user's tilt operation), image stabilization during shooting, game control and inertial navigation.

The pressure sensor 1413 may be disposed on a side frame of the terminal 1400 and/or a lower layer of the display screen 1405. When the pressure sensor 1413 is disposed on the side frame of the terminal 1400, a user's holding signal to the terminal 1400 can be detected. The processor 1401 can perform left-right hand recognition or quick operation according to the holding signal collected by the pressure sensor 1413. When the pressure sensor 1413 is disposed on the lower layer of the display screen 1405, the processor 1401 controls an operable control on the UI according to a user's pressure operation on the display screen 1405. The operable control includes at least one of a button control, a scroll bar control, an icon control and a menu control.

The fingerprint sensor 1414 is configured to collect a user's fingerprint. The processor 1401 identifies the user's identity based on the fingerprint collected by the fingerprint sensor 1414, or the fingerprint sensor 1414 identifies the user's identity based on the collected fingerprint. When the user's identity is identified as trusted, the processor 1401 authorizes the user to perform related sensitive operations, such as unlocking the screen, viewing encrypted information, downloading software, paying, and changing settings. The fingerprint sensor 1414 may be provided on the front, back, or side of the terminal 1400. When the terminal 1400 is provided with a physical button or a manufacturer's Logo, the fingerprint sensor 1414 may be integrated with the physical button or the manufacturer's Logo.

The optical sensor 1415 is configured to collect ambient light intensity. In one embodiment, the processor 1401 may control the display brightness of the display screen 1405 according to the ambient light intensity collected by the optical sensor 1415. Specifically, when the ambient light intensity is high, the display brightness of the display screen 1405 is increased; and when the ambient light intensity is low, the display brightness of the display screen 1405 is decreased. In another embodiment, the processor 1401 may also dynamically adjust shooting parameters of the camera component 1406 according to the ambient light intensity collected by the optical sensor 1415.

The proximity sensor 1416, also referred to as a distance sensor, is usually disposed on the front panel of the terminal 1400. The proximity sensor 1416 is configured to capture a distance between the user and a front surface of the terminal 1400. In one embodiment, when the proximity sensor 1416 detects that the distance between the user and the front surface of the terminal 1400 becomes gradually smaller, the processor 1401 controls the display screen 1405 to switch from a screen-on state to a screen-off state. When it is detected that the distance between the user and the front surface of the terminal gradually increases, the processor 1401 controls the display screen 1405 to switch from the screen-off state to the screen-on state.

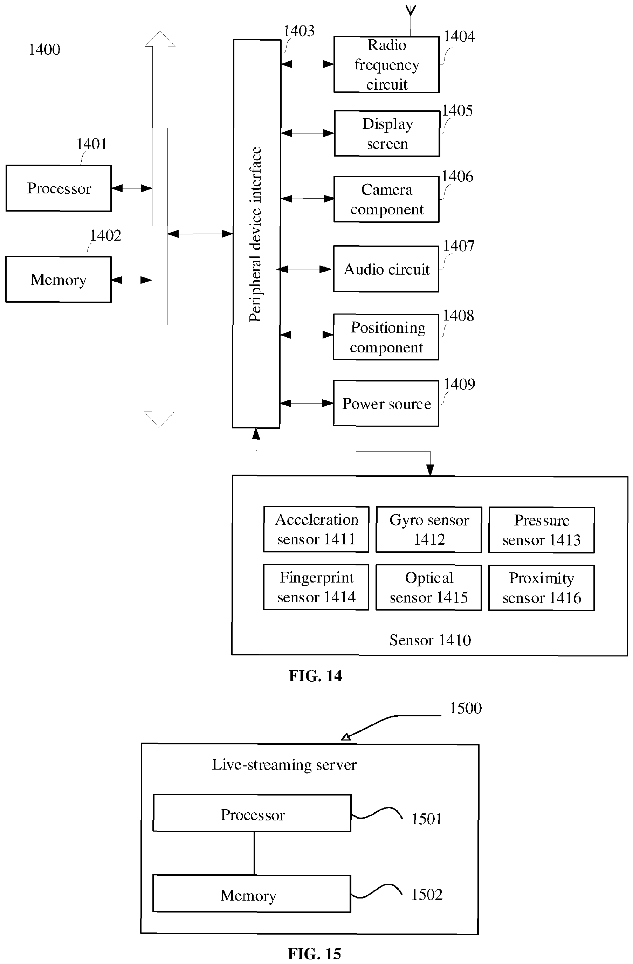

It will be understood by those skilled in the art that the structure shown in FIG. 14 does not constitute a limitation to the terminal 1400, and may include more or less components than those illustrated, or combine some components or adopt different arrangements for components.

Some embodiments of the present disclosure provide a server, including at least one processor and a volatile or nonvolatile memory configured to store at least one instruction executable by the at least one processor;
wherein the at least one processor, when executing the at least one instruction, is caused to perform: publishing live-streaming data, sent by an anchor terminal in a first live-streaming room, into a directed live-streaming room; receiving first interaction data posted by a terminal in the directed live-streaming room with regard to the live-streaming data; and sending the first interaction data to a terminal in the first live-streaming room.

In some embodiments, the at least one processor, when executing the at least one instruction, is caused to perform: acquiring an audience identifier set of the first live-streaming room, wherein the audience identifier set includes a directed-audience identifier registered for the directed live-streaming room; and publishing the live-streaming data into the directed live-streaming room based on the directed-audience identifier.

In some embodiments, the at least one processor, when executing the at least one instruction, is further caused to perform: sending an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, the at least one processor, when executing the at least one instruction, is further caused to perform: acquiring a live-streaming schedule of the directed live-streaming room, wherein the live-streaming schedule includes a correspondence relationship between a live-streaming room identifier and a time period; determining, according to a current time point and the live-streaming schedule, the live-streaming room identifier corresponding to the time period to which the current time point belongs; and registering a directed-audience identifier for the directed live-streaming room in the first live-streaming room indicated by the live-streaming room identifier.

In some embodiments, the at least one processor, when executing the at least one instruction, is further caused to perform: de-registering the directed-audience identifier in the first live-streaming room in response to a change of the live-streaming identifier as determined; and registering a directed-audience identifier for the directed live-streaming room in a second live-streaming room indicated by the live-streaming identifier as changed.

FIG. 15 is a schematic structural diagram of a live-streaming server according to some embodiments of the present disclosure. The live-streaming server 1500 may be of great difference due to different configurations or performance, and may include one or more central processing Unit (CPU) 1501 and one or more memories 1502, wherein the memory 1502 stores at least one instruction, and the at least one instruction, when loaded and executed by the CPU 1501, causes the CPU to implement the method for displaying interaction data provided by the method embodiments. Certainly, the live-streaming server may also be provided with components such as a wired or wireless network interface, a keyboard and an input/output (I/O) interface for facilitating input and output. The live-streaming server may further include other components for implementing device functions, which will not be repeated herein.

Some embodiments of the present disclosure further provide a non-transitory computer-readable storage medium storing at least one instruction therein. The at least one instruction, when executed by a processor of a live-streaming server, causes the live-streaming server to perform: publishing live-streaming data, sent by an anchor terminal in a first live-streaming room, into a directed live-streaming room; receiving first interaction data posted by a terminal in the directed live-streaming room with regard to the live-streaming data; and sending the first interaction data to a terminal in the first live-streaming room.

In some embodiments, the at least one instruction, when executed by the processor of the live-streaming server, further causes the live-streaming server to perform: acquiring an audience identifier set of the first live-streaming room, wherein the audience identifier set includes a directed-audience identifier registered for the directed live-streaming room; and publishing the live-streaming data into the directed live-streaming room based on the directed-audience identifier.

In some embodiments, the at least one instruction, when executed by the processor of the live-streaming server, further causes the live-streaming server to perform: sending an interaction message to the terminal in the first live-streaming room, wherein the interaction message includes the first interaction data and a directed-audience identifier, and the directed-audience identifier is a virtual audience identifier registered for the directed live-streaming room in the first live-streaming room.

In some embodiments, the at least one instruction, when executed by the processor of the live-streaming server, further causes the live-streaming server to perform: acquiring a live-streaming schedule of the directed live-streaming room, wherein the live-streaming schedule includes a correspondence relationship between a live-streaming room identifier and a time period; determining, according to a current time point and the live-streaming schedule, the live-streaming room identifier corresponding to the time period to which the current time point belongs; and registering the directed-audience identifier for the directed live-streaming room in the first live-streaming room indicated by the live-streaming room identifier.

In some embodiments, the at least one instruction, when executed by the processor of the live-streaming server, further causes the live-streaming server to perform: de-registering the directed-audience identifier in the first live-streaming room in response to a change of the live-streaming identifier as determined; and registering a directed-audience identifier for the directed live-streaming room in a second live-streaming room indicated by the live-streaming identifier as changed.

Some embodiments of the present disclosure further provide a non-transitory computer-readable storage medium storing at least one instruction therein. The at least one instruction, when executed by a processor of a terminal, causes the terminal to perform: displaying live-streaming data, sent by an anchor terminal in a first live-streaming room, in a first live-streaming interface corresponding to the first live-streaming room; acquiring first interaction data posted by a terminal in a directed live-streaming room with regard to the live-streaming data, wherein the directed live-streaming room is configured to display the live-streaming data; and displaying the first interaction data in the first live-streaming interface.

In some embodiments, the at least one instruction, when executed by the processor of the terminal, further causes the terminal to perform: receiving the first interaction data sent from a live-streaming server, wherein the first interaction data is sent to the live-streaming server by the terminal.

In some embodiments, the at least one instruction, when executed by the processor of the terminal, further causes the terminal to perform: sending the live-streaming data to a live-streaming server based on an anchor identifier of the first live-streaming room, wherein the live-streaming data is published into the first live-streaming room and the directed live-streaming room by the live-streaming server.

In some embodiments, the at least one instruction, when executed by the processor of the terminal, further causes the terminal to perform: adding a directing sign to the first interaction data, and displaying the first interaction data added with the directing sign in the first live-streaming interface; displaying, in the first live-streaming interface, the first interaction data in a target displaying style; or displaying the first interaction data and a directed-audience identifier in the first live-streaming interface, wherein the directed-audience identifier is a virtual audience identifier registered for the directed live-streaming room in the first live-streaming room.

In some embodiments, the at least one instruction, when executed by the processor of the terminal, further causes the terminal to perform: acquiring second interaction data posted by a terminal in the first live-streaming room with regard to the live-streaming data; and displaying the first interaction data and the second interaction data in the first live-streaming interface.

In some embodiments, the at least one instruction, when executed by the processor of the terminal, further causes the terminal to perform: displaying, in the first live-streaming interface, the first interaction data and the second interaction data in different displaying styles; displaying the first interaction data and the second interaction data in different displaying regions of the first live-streaming interface.

Some embodiments of the present disclosure further provide a non-transitory computer-readable storage medium storing at least one instruction therein. The at least one instruction, when executed by a processor of a terminal, causes the terminal to perform: displaying live-streaming data, sent by an anchor terminal in a first live-streaming room, in a directed live-streaming interface corresponding to a directed live-streaming room; acquiring first interaction data posted into the directed live-streaming interface; and sending the first interaction data to a terminal in the first live-streaming room, wherein the first interaction data is displayed, by the terminal, in a first live-streaming interface corresponding to the first live-streaming room.

In some embodiments, the at least one instruction, when executed by the processor of the terminal, further causes the terminal to perform: receiving the live-streaming data sent from a live-streaming server, wherein the live-streaming data is sent to the live-streaming server by the anchor terminal in the first live-streaming room.

In some embodiments, the at least one instruction, when executed by the processor of the terminal, further causes the terminal to perform: acquiring a live-streaming schedule of the directed live-streaming room, wherein the live-streaming schedule includes a correspondence relationship between a live-streaming room identifier and a time period; determining, according to a current time point and the live-streaming schedule, the live-streaming room identifier corresponding to the time period to which the current time point belongs, wherein the live-streaming room identifier is configured to indicate the first live-streaming room; and sending an interaction message to the live-streaming server, wherein the interaction message includes the first interaction data and the live-streaming room identifier, and the first interaction data is sent, by the live-streaming server, to the terminal in the first live-streaming room.

Some embodiments of the present disclosure further provide a computer program product. At least one instruction in the computer program product, when executed by a processor of a live-streaming server, causes the live-streaming server to perform the method for displaying interaction data; and the at least one instruction in the computer program product, when executed by a processor of a terminal, causes the terminal to perform the method for displaying interaction data.

Other embodiments of the present disclosure will be apparent to those skilled in the art from consideration of the description and practice of the present disclosure disclosed herein. The present disclosure is intended to cover any variations, uses, or adaptations of the present disclosure following the general principles thereof and including such departures from the present disclosure as come within known or customary practice in the art. It is intended that the description and examples be considered as exemplary only, with a true scope and spirit of the present disclosure being indicated by the appended claims.

## Claims

1. A method for displaying interaction data, comprising:
displaying live-streaming data, sent by an anchor terminal in a first live-streaming room, in a first live-streaming interface corresponding to the first live-streaming room;
acquiring first interaction data posted by a terminal in a directed live-streaming room with regard to the live-streaming data, wherein the directed live-streaming room is configured to display the live-streaming data; and
displaying the first interaction data in the first live-streaming interface.

2. The method according to claim 1, wherein said acquiring the first interaction data posted by the terminal in the directed live-streaming room with regard to the live-streaming data comprises:
receiving the first interaction data sent from a live-streaming server, wherein the first interaction data is sent to the live-streaming server by the terminal.

3. The method according to any one of claims 1 and 2, further comprising:
sending the live-streaming data to a live-streaming server based on an anchor identifier of the first live-streaming room, wherein the live-streaming data is published into the first live-streaming room and the directed live-streaming room by the live-streaming server.

4. The method according to any one of claims 1 to 3, wherein said displaying the first interaction data in the first live-streaming interface comprises at least one of:
adding a directing sign to the first interaction data, and displaying the first interaction data added with the directing sign in the first live-streaming interface;
displaying, in the first live-streaming interface, the first interaction data in a target displaying style; or
displaying the first interaction data and a directed-audience identifier in the first live-streaming interface, wherein the directed-audience identifier is a virtual audience identifier registered for the directed live-streaming room in the first live-streaming room.

5. The method according to any one of claims 1 to 4, further comprising:
acquiring second interaction data posted by a terminal in the first live-streaming room with regard to the live-streaming data; and
displaying the first interaction data in the first live-streaming interface comprises:
displaying the first interaction data and the second interaction data in the first live-streaming interface.

6. The method according to claim 5, wherein said displaying the first interaction data and the second interaction data in the first live-streaming interface comprises at least one of:
displaying, in the first live-streaming interface, the first interaction data and the second interaction data in different displaying styles; or
displaying the first interaction data and the second interaction data in different displaying regions of the first live-streaming interface.

7. A method for displaying interaction data, comprising:
displaying live-streaming data, sent by an anchor terminal in a first live-streaming room, in a directed live-streaming interface corresponding to a directed live-streaming room;
acquiring first interaction data posted into the directed live-streaming interface; and
sending the first interaction data to a terminal in the first live-streaming room, wherein the first interaction data is displayed, by the terminal, in a first live-streaming interface corresponding to the first live-streaming room.

8. The method according to claim 7, further comprising:
receiving the live-streaming data sent from a live-streaming server, wherein the live-streaming data is sent to the live-streaming server by the anchor terminal in the first live-streaming room.

9. The method according to any one of claims 7 and 8, wherein said sending the first interaction data to the terminal in the first live-streaming room comprises:
acquiring a live-streaming schedule of the directed live-streaming room, wherein the live-streaming schedule comprises a correspondence relationship between a live-streaming room identifier and a time period;
determining, according to a current time point and the live-streaming schedule, the live-streaming room identifier corresponding to the time period to which the current time point belongs, wherein the live-streaming room identifier is configured to indicate the first live-streaming room; and
sending an interaction message to the live-streaming server, wherein the interaction message comprises the first interaction data and the live-streaming room identifier, and the first interaction data is sent, by the live-streaming server, to the terminal in the first live-streaming room.

10. A method for displaying interaction data, comprising:
publishing live-streaming data, sent by an anchor terminal in a first live-streaming room, into a directed live-streaming room;
receiving first interaction data posted by a terminal in the directed live-streaming room with regard to the live-streaming data; and
sending the first interaction data to a terminal in the first live-streaming room.

11. The method according to claim 10, wherein said publishing the live-streaming data, sent by the anchor terminal in the first live-streaming room, into the directed live-streaming room comprises:
acquiring an audience identifier set of the first live-streaming room, wherein the audience identifier set comprises a directed-audience identifier registered for the directed live-streaming room; and
publishing the live-streaming data into the directed live-streaming room based on the directed-audience identifier.

12. The method according to any one of claims 10 and 11, wherein said sending the first interaction data to the terminal in the first live-streaming room comprises:
sending an interaction message to the terminal in the first live-streaming room, wherein the interaction message comprises the first interaction data and a directed-audience identifier, and the directed-audience identifier is a virtual audience identifier registered for the directed live-streaming room in the first live-streaming room.

13. The method according claim 12, further comprising:
acquiring a live-streaming schedule of the directed live-streaming room, wherein the live-streaming schedule comprises a correspondence relationship between a live-streaming room identifier and a time period;
determining, according to a current time point and the live-streaming schedule, the live-streaming room identifier corresponding to the time period to which the current time point belongs; and
registering the directed-audience identifier for the directed live-streaming room in the first live-streaming room indicated by the live-streaming room identifier.

14. The method according to claim 13, further comprising:
de-registering the directed-audience identifier in the first live-streaming room in response to a change of the live-streaming identifier as determined; and
registering a directed-audience identifier for the directed live-streaming room in a second live-streaming room indicated by the live-streaming identifier as changed.

15. An apparatus for displaying interaction data, comprising:
a live-streaming data displaying unit, configured to display live-streaming data, sent by an anchor terminal in a first live-streaming room, in a first live-streaming interface corresponding to the first live-streaming room;
a first interaction data acquiring unit, configured to acquire first interaction data posted by a terminal in a directed live-streaming room with regard to the live-streaming data, wherein the directed live-streaming room is configured to display the live-streaming data; and
an interaction data displaying unit, configured to display the first interaction data in the first live-streaming interface.

16. An apparatus for displaying interaction data, comprising:
a live-streaming data displaying unit, configured to display live-streaming data, sent by an anchor terminal in a first live-streaming room, in a directed live-streaming interface corresponding to a directed live-streaming room;
an interaction data acquiring unit, configured to acquire first interaction data post into the directed live-streaming interface; and
an interaction data sending unit, configured to send the first interaction data to a terminal in the first live-streaming room, wherein the first interaction data is displayed, by the terminal in the first live-streaming room, in a first live-streaming interface corresponding to the first live-streaming room.

17. An apparatus for displaying interaction data, comprising:
a live-streaming data publishing unit, configured to publish live-streaming data, sent by an anchor terminal in a first live-streaming room, into a directed live-streaming room;
an interaction data receiving unit, configured to receive first interaction data posted by a terminal in the directed live-streaming room with regard to the live-streaming data; and
an interaction data sending unit, configured to send the first interaction data to a terminal in the first live-streaming room.

18. A terminal, comprising:
at least one processor; and
a volatile or nonvolatile memory configured to store at least one instruction executable by the at least one processor;
wherein the at least one processor, when executing the at least one instruction, is caused to perform: displaying live-streaming data, sent by an anchor terminal in a first live-streaming room, in a first live-streaming interface corresponding to the first live-streaming room; acquiring first interaction data posted by a terminal in a directed live-streaming room with regard to the live-streaming data, wherein the directed live-streaming room is configured to display the live-streaming data; and displaying the first interaction data in the first live-streaming interface; or
wherein the at least one processor, when executing the at least one instruction, is caused to perform: displaying live-streaming data, sent by an anchor terminal in a first live-streaming room, in a directed live-streaming interface corresponding to a directed live-streaming room; acquiring first interaction data posted into the directed live-streaming interface; and sending the first interaction data to a terminal in the first live-streaming room, wherein the first interaction data is displayed, by the terminal in the first live-streaming room, in a first live-streaming interface corresponding to the first live-streaming room.

19. A server, comprising:
at least one processor;
a volatile or nonvolatile memory configured to store at least one instruction executable by the at least one processor;
wherein the at least one processor, when executing the at least one instruction, is caused to perform: publishing live-streaming data, sent by an anchor terminal in a first live-streaming room, into a directed live-streaming room; receiving first interaction data posted by a terminal in the directed live-streaming room with regard to the live-streaming data; and sending the first interaction data to a terminal in the first live-streaming room.

20. A non-transitory computer-readable storage medium storing at least one instruction therein, wherein the at least one instruction, when executed by a processor of a terminal, causes the terminal to perform: displaying live-streaming data, sent by an anchor terminal in a first live-streaming room, in a first live-streaming interface corresponding to the first live-streaming room; acquiring first interaction data posted by a terminal in a directed live-streaming room with regard to the live-streaming data, wherein the directed live-streaming room is configured to display the live-streaming data; and displaying the first interaction data in the first live-streaming interface; or
wherein the at least one instruction, when executed by a processor of a terminal, causes the terminal to perform: displaying live-streaming data, sent by an anchor terminal in a first live-streaming room, in a directed live-streaming interface corresponding to a directed live-streaming room; acquiring first interaction data posted into the directed live-streaming interface; and sending the first interaction data to a terminal in the first live-streaming room, wherein the first interaction data is displayed, by the terminal, in a first live-streaming interface corresponding to the first live-streaming room; or
wherein the at least one instruction, when executed by a processor of a server, causes the server to perform: publishing live-streaming data, sent by an anchor terminal in a first live-streaming room, into a directed live-streaming room; receiving first interaction data posted by a terminal in the directed live-streaming room with regard to the live-streaming data; and sending the first interaction data to a terminal in the first live-streaming room.
